# EUROPEAN PATENT APPLICATION

(11) **EP 4 753 329 A2**
(43) Date of publication of application: **03.06.2026**
(21) Application number: 26172792.9
(22) Date of filing: 05.08.2021
(51) Int. Cl.: H04W 36/00

(54) **USER PLANE INTEGRITY PROTECTION AT INTERWORKING HANDOVER BETWEEN EPS AND 5GS**

(30) Priority: 06.08.2020 US 202063061920 P
(62) Divisional of application: 21755751.1
(71) Applicant: Telefonaktiebolaget LM Ericsson (publ), 164 83 Stockholm (SE)
(72) Inventor: Wifvesson, Monica, 223 62 Lund (SE)
(74) Representative: Ericsson

(57) **Abstract**

A method performed by an access and mobility node for interworking handover from a fifth generation system (5GS) to an evolved packet system (EPS) is provided. The method comprises forwarding a relocation request for a user equipment (UE) to a mobility management node. The relocation request comprises a user plane (UP) security policy and a UP security activation status for a packet data unit (PDU) session established between a source node and the UE. The PDU session being mapped to a packet data network (PDN) connection in the EPS for the UE being handed over to the mobility management node.

## Description

### TECHNICAL FIELD

The present disclosure relates generally to communications, and more particularly to user plane integrity protection at interworking handover between an evolved packet system (EPS) and a fifth generation system (5GS) methods and related devices and nodes supporting wireless communications.

### BACKGROUND

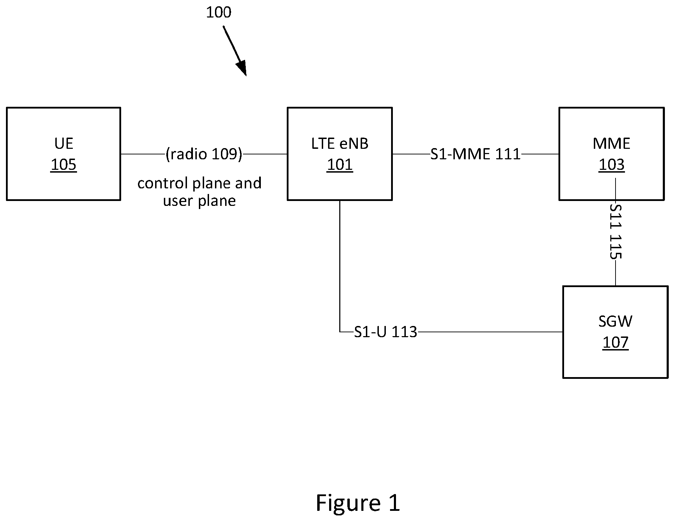

The 3GPP TS 23.401 (V 16.7.0) describes the 4G network architecture. A stripped down simplified version of a 4G network 100 is shown in Figure 1 where a single e Node B (eNB) Long Term Evolution (LTE, which is popularly known as 4G) (LTE eNB 101) is connected to a MME (Mobility Management Function) node 103, referred to herein as Option 1.

A UE (User Equipment) is a mobile device used by a user to wirelessly access the network. The radio access network (RAN) function or base station, e.g. LTE eNB (also referred to as 4G Node B), is responsible for providing wireless radio communication to the UE 105 and connecting the UE 105 to the core network. A core network function, e.g. MME 103, is responsible for handling the mobility of the UE 105, among other responsibilities and also responsible for handling the session and traffic steering of the UE 105, among other responsibilities. Yet another core network function, e.g. SGW 107 (Serving Gateway) is responsible for interconnecting to data network via packet data network (PDN) Gateway, packet routing and forwarding, among other responsibilities.

The RAN in 5G (called NG-RAN) has another type of base station that may be referred to as a ng-eNB. This is an evolved LTE (Long Term Evolution) eNB (e Node B) connected to a 5G Core.

As used herein, reference to an evolved long term evolution radio access node includes, e.g., an E-UTRA node (also referred to as a ng-eNB or a Next Generation Evolved Node-B as referenced, e.g., in 3GPP TS 33.501 (V 16.3.0)). An ng-eNB is an enhanced LTE/4G eNB that connects to a 5G Core Network via NG interfaces but still uses LTE/4G air interfaces to communicate with a 5G UE. As used herein, reference to a next generation radio access node B includes, e.g., a gNB (also referred to a new radio access node). As used herein, reference to an long term evolution eNode B includes, e.g., an LTE eNB (also referred to as a 4G Node B).

The UE interacts with the LTE eNB over-the-air using radio interface. The radio interface traffic includes control plane traffic and user plane traffic. The radio control plane is also called RRC (Radio Resource Control). The LTE eNB in turn may interact with the MME using an S1-MME interface. An S1-MME interface may be between the MME and a LTE eNB. Similarly, an LTE eNB and an SGW may interact using an S1-U interface, as illustrated in Figure 1.

3rd Generation Partnership Project (3GPP) Technical Specification (TS) 33.501 v16.3.0 10 July 2020 (2020-07-10) discloses security architecture and procedures for 5G system.

### SUMMARY

According to some embodiments of the present disclosure, a method performed by an access and mobility node for interworking handover from an evolved packet system, EPS, to a fifth generation system, 5GS, in a radio access network is provided. The method includes receiving a relocation request from a mobility management node. The relocation request comprises an indication comprising a least one of that the UE supports a UP integrity protection mode over the radio access network connected to a fifth generation core, 5GC, and that the UE supports a UP integrity protection mode over the radio access network connected to the EPS. The method further includes sending a handover request to a radio access node. The handover request comprises the indication comprising at least one of that the UE supports a UP integrity protection over the radio access network connected to a fifth generation core, 5GC, and that the UE supports a UP integrity protection mode over the radio access network connected to the EPS.

According to other embodiments of the present disclosure, a method performed by a session management node for interworking handover from an evolved packet system, EPS, to a fifth generation system, 5GS, in a radio access network is provided. The method includes receiving from an access and mobility node a context request comprising a user plane, UP, security policy per an EPS packet data network, PDN, connection. The method further includes mapping the EPS PDN connection to a packet data unit, PDU, session. The mapping comprises the UP security policy for the EPS PDN connection to the PDU session.

According to other embodiments of the present disclosure, a method performed by a mobility management node for interworking handover from an evolved packet system, EPS, to a fifth generation system, 5GS, in a radio access network is provided. The method includes sending a relocation request to an access and mobility node. The relocation request comprises an indication comprising at least one of that the UE supports a UP integrity protection mode over the radio access network connected to a fifth generation core, 5GC, and that the UE supports a UP integrity protection mode over the radio access network connected to the EPS. The method further includes receiving a relocation response message from the access and mobility node.

According to other embodiments of the present disclosure, a method performed by a radio access node for interworking handover from an evolved packet system, EPS, to a fifth generation system, 5GS, in a radio access network is provided. The method includes using a user plane, UP, security activation of a user equipment, UE, from a source cell when a UP security activation status indicates that the UP security activation of the UE from the source cell is supported in the radio access node. The method further includes activating UP integrity protection with the UE when the UE supports UP integrity protection over the radio access network connected to a fifth generation core, 5GC.

According to other embodiments of the present disclosure, a method performed by an access and mobility node for interworking handover from a fifth generation system, 5GS, to an evolved packet system, EPS, in a radio access network is provided. The method includes forwarding a relocation request for a user equipment, UE, to a mobility management node comprising a user plane, UP, security context. The method further includes mapping a packet data unit, PDU, session to a packet data network, PDN, session based on the UP security context. The mapping comprises an EPS UE context for the UE for the PDU session with an active UP connection and for the PDU session omitting an active UP connection.

According to other embodiments of the present disclosure, a method performed by a mobility management node for interworking handover from a fifth generation system, 5GS, to an evolved packet system, EPS, in a radio access network is provided. The method includes receiving a relocation request from an access and mobility node. The relocation request comprises an indication comprising a least one of that the UE supports a UP integrity protection mode over the radio access network connected to a fifth generation core, 5GC, and that the UE supports a UP integrity protection mode over the radio access network connected to the EPS. The method further includes sending a handover request to a target radio access node. The handover request comprises the indication comprising at least one of that the UE supports a UP integrity protection over the radio access network connected to a fifth generation core, 5GC, and that the UE supports a UP integrity protection mode over the radio access network connected to the EPS.

According to other embodiments of the present disclosure, a method performed by a target radio access node for interworking handover from a fifth generation system, 5GS, to an evolved packet system, EPS, in a radio access network is provided. The method includes using a user plane, UP security activation of a user equipment, UE, from a source cell when a UP security activation status indicates that the UP security activation of the UE from the source cell is supported in the radio access node. The method further includes activating UP integrity protection with the UE when the UE supports UP integrity protection over the radio access network connected to the EPS.

Corresponding embodiments of inventive concepts for an access and mobility node, a session management node, a mobility management node, a radio access node, a target radio access node, computer products, and computer programs are also provided.

In various embodiments herein, at interworking from EPS to 5GS, network nodes of a radio access network operate to indicate that a UE supports UP integrity protection for handover to another system as 5GS. As a consequence, the UP integrity protection may be activated for data radio bearers (DRBs) in 5GS, gNB, and/or ng-eNB. In other embodiments, at interworking from 5GS to EPS, network nodes of a radio access network operate to indicate that a UE supports UP integrity protection for handover to another system as EPS. As a consequence, UP integrity protection may be activated for DRBs in EPS and/or LTE.

### BRIEF DESCRIPTION OF THE DRAWINGS

The accompanying drawings, which are included to provide a further understanding of the disclosure and are incorporated in a constitute a part of this application, illustrate certain non-limiting embodiments of inventive concepts. In the drawings:
Figure 1 is a simplified 4G network where a single LTE eNB is connected to an MME, referred to herein as Option 1;
Figure 2 is a signalling flow diagram of handover from 5GS to EPC over N26 as discussed in 3GPP TS 23.502;
Figure 3 is a signalling flow diagram of handover from EPS to 5GS over N26 as discussed in 3GPP TS 23.502;
Figure 4 is a signalling diagram for interworking handover from an EPS to 5GS in a radio access network according to some embodiments of the present disclosure;
Figure 5 is a signalling diagram for interworking handover from an 5GS to EPS in a radio access network, e.g., over N26, according to some embodiments of the present disclosure;
Figure 6 is a block diagram of elements of a UE that are configured according to some embodiments of the present disclosure;
Figure 7 is a block diagram of elements of a radio access node that are configured according to some embodiments of the present disclosure;
Figure 8 is a block diagram of elements of a session management node that are configured according to some embodiments of the present disclosure;
Figure 9 is a block diagram of elements of an access and mobility node that are configured according to some embodiments of the present disclosure;
Figure 10 is a block diagram of elements of a mobility management node that are configured according to some embodiments of the present disclosure;
Figures 11-14 are flowcharts of operations for performing interworking handover from an evolved packet system, EPS, to a fifth generation system, 5GS, in a radio access network, in accordance with some embodiments of the present disclosure;
Figures 15-17 are flowcharts of operations for performing interworking handover from a fifth generation system, 5GS, to an evolved packet system, EPS, to in a radio access network, in accordance with some embodiments of the present disclosure;
Figure 18 is a block diagram of a wireless network in accordance with some embodiments of the present disclosure;
Figure 19 is a block diagram of a user equipment or other terminal in accordance with some embodiments of the present disclosure;
Figure 20 is a block diagram of a virtualization environment in accordance with some embodiments of the present disclosure;
Figure 21 is a block diagram of a telecommunication network connected via an intermediate network to a host computer in accordance with some embodiments of the present disclosure;
Figure 22 is a block diagram of a host computer communicating via a base station with a user equipment user equipment or other terminal over a partially wireless connection in accordance with some embodiments of the present disclosure;
Figure 23 is a block diagram of methods implemented in a communication system including a host computer, a base station and a user equipment user equipment or other terminal in accordance with some embodiments of the present disclosure;
Figure 24 is a block diagram of methods implemented in a communication system including a host computer, a base station and a user equipment user equipment or other terminal in accordance with some embodiments of the present disclosure;
Figure 25 is a block diagram of methods implemented in a communication system including a host computer, a base station and a user equipment user equipment or other terminal in accordance with some embodiments of the present disclosure; and
Figure 26 is a block diagram of methods implemented in a communication; and system including a host computer, a base station and a user equipment user equipment or other terminal in accordance with some embodiments of the present disclosure.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter. The term "terminal" is used in a non-limiting manner and, as explained below, can refer to any type of radio communication terminal. The term "terminal" herein may be interchangeable replaced with the term "radio terminal," "radio communication terminal," "radio device," or "user equipment (UE)."

The following explanation of potential problems with existing solutions is a present realization as part of the present disclosure and is not to be construed as previously known by others. There is no support for the integrity protection of user plane in LTE packet data convergence protocol (PDCP) in Rel-15 UE and in a Rel-15 LTE eNB in Option 1.

Operational advantages that may be provided by one or more embodiments of the present disclosure may include user plane integrity protection (UP IP) of user plane in LTE PDCP in a Rel-15 UE and a Rel-15 LTE eNB in Option 1. As a consequence, for example, an advantage of enablement and use of UP IP may be that at interworking handover from EPS to 5GS, data radio bearers for a PDN connection for which the network has activated user plane integrity protection can be handed over to another system as 5GS. This may ensure that the user plane integrity protection can be activated for the data radio bearers in 5GS/gNB/ng-eNB. An additional advantage of enablement and use of UP IP may be that at interworking handover from 5GS to EPS, data radio bearers for a PDU session for which the network has activated user plane integrity protection can be handed over to another system as EPS. This may ensure that the user plane integrity protection can be activated for the data radio bearers in EPS/LTE.

The logical aspects between the UE and the MME may be referred to as NAS (non-access stratum) and between the UE and the LTE-eNB may referred to as AS (access stratum). Correspondingly, the security of communication (control plane and user plane, if applicable) may be referred to as NAS security and AS security, respectively. The AS security can include confidentiality and integrity protection of both the control plane (e.g., the RRC) and the user plane traffic. As security is now discussed further. The radio bearers in AS that carry control plane or the RRC messages can be called signaling data bearer(s) (SRB). Similarly, the radio bearers in AS that carry user plane messages can be called data radio bearer(s) (DRB).

In LTE system, the AS security is mandatory for both the RRC and the user plane. This means that both the confidentiality and the integrity protection are activated for the RRC and the confidentiality is activated for the user plane. There is no support for the integrity protection of user plane in LTE. While there are null-encryption and null-integrity algorithms in LTE, they do not encrypt and integrity protect the RRC or user plane traffic in practice. As a consequence, these null algorithms are just another kind of algorithm and therefore the AS security is still said to be activated, i.e., activated using null algorithms.

Interworking handover will now be discussed.

As described in 3GPP TS 23.501 (V 16.5.1), in order to interwork with evolved packet core (EPC), a UE can operate in Single Registration or Dual Registration mode.

When operating in Single Registration mode, there can be two cases depending on the support of an N26 interface between the AMF and the MME. In both cases, the security mechanisms described below are applicable.

First, a handover procedure from 5GS to EPS over N26 is discussed.

This security mechanism covers the case of handover from 5GS to EPS, as defined in 3GPP TS 23.502 (V 16.5.1). If a UE is initially registered and connected to the 5GC, the 5GC has a current security context for the UE. The current 5G security context may be a mapped 5G security context resulting from a previous mobility from EPC, or a native 5G security context resulting from a primary authentication with the 5GC.

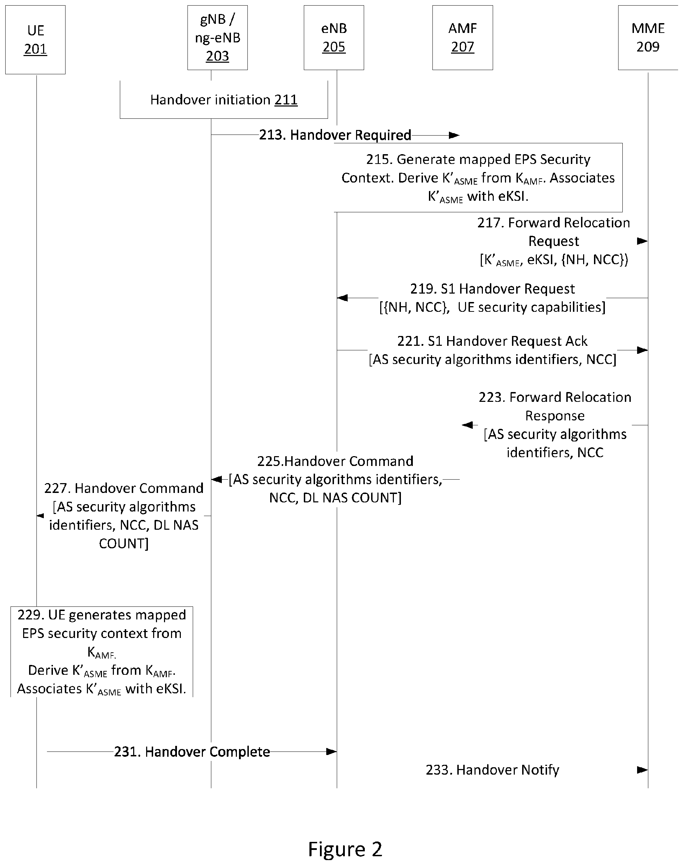

Figure 2 is a signalling flow diagram of handover from 5GS to EPC over N26 as discussed in 3GPP TS 23.502 (V 16.5.1). Devices included in Figure 2 include UE 201, gNB/ng-eNB 203, eNB 205, AMF 207, and MME 209.

Second, a handover procedure from EPS to 5GS over N26 is discussed.

This security mechanism covers the case of handover from EPS to 5GS, as defined in 3GPP TS 23.502 (V 16.5.1).

As the UE 201 is connected to the EPS, the source MME 209 has a current EPS security context for a UE 201. The current EPS security context may be a mapped EPS security context resulting from a previous mobility from 5GC, or a native EPS security context resulting from a primary authentication with the EPS.

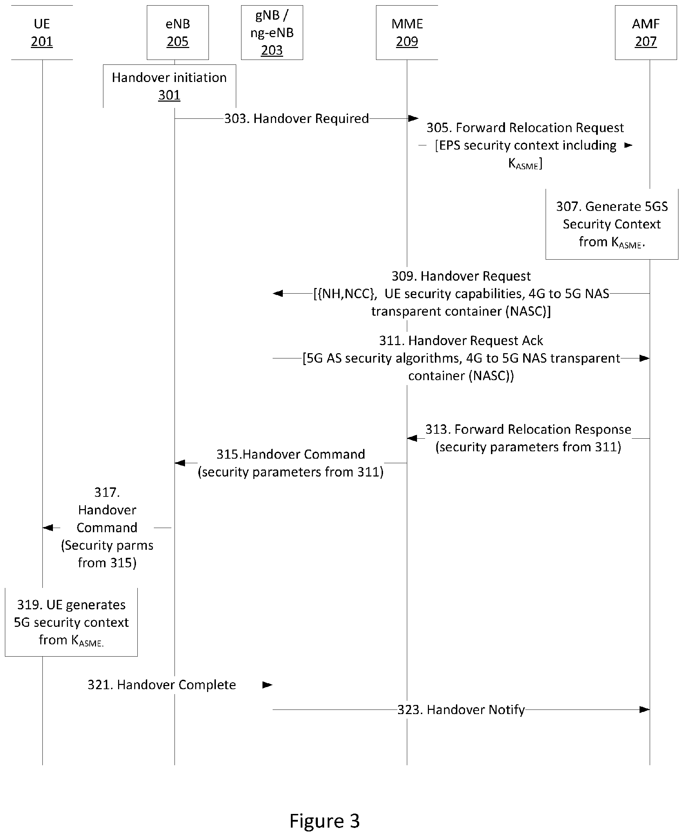

Figure 3 is a signalling flow diagram of handover from EPS to 5GS over N26 as discussed in 3GPP TS 23.502 (V 16.5.1). Devices included in Figure 3 include UE 201, eNB 205, gNB/ng-eNB 203, MME 209, and AMF 207.

As discussed above, in an LTE system, AS security is mandatory for both the RRC and the user plane. This means that both confidentiality and integrity protection are activated for the RRC and confidentiality is activated for the user plane. There is no support for integrity protection of the user plane in LTE. While there are null-encryption and null-integrity algorithms in LTE, null-encryption and null-integrity algorithms in LTE do not encrypt and integrity protect the RRC or user plane traffic. Because these null algorithms are a type of algorithm, AS security is still said to be activated, e.g., activated using null algorithms.

There is no support for the integrity protection of user plane in LTE PDCP in a Rel-15 UE and in a Rel-15 LTE eNB in Option 1. Non-published internal reference implementations introduce integrity protection of user plane in LTE PDCP in an eNB and UE when connected to EPS. The present disclosure includes a UP security policy for UP integrity protection and potentially UP encryption, determined in the MME and provided to the LTE eNB over S1 interface.

This UP security policy can have the setting of Not Needed, Required or Preferred for UP integrity protection, and this UP security policy can apply for the lifetime of the PDN connection.

According to some embodiments of the present disclosure, a PDN connection has been established in EPS/LTE between the network and a UE where the LTE eNB has activated UP integrity protection for the DRB's setup for this PDN connection with the UE. At interworking handover from EPS to 5GS, the network needs to ensure that the DRB's for this particular PDN connection, which the network has activated UP integrity protection, can be handed over to another system as 5GS which can ensure that the UP integrity protection can be activated in 5GS.

According to another or alternative embodiment of the present disclosure, an opposite case to the above embodiments can be presented. A ng-eNB connected to 5GC supports UP integrity protection. A PDU session has been established, between the network (e.g., AMF/ng-eNB or AMF/gNB) and the UE where the ng-eNB or the gNB has activated UP integrity protection for the DRB's setup for this PDU session with the UE. At interworking handover from 5GS to EPS, the network needs to ensure that the DRB's for this particular PDU session which the network has activated UP integrity protection, can be handed over to another system as EPS which can ensure that the UP integrity protection can be activated in EPS.

In various embodiments of the present disclosure, at interworking handover from EPS to 5GS, the network may ensure that the DRB's for this particular PDN connection which the network has activated UP integrity protection, can be handed over to another system as 5GS which can ensure that the UP integrity protection can be activated for the DRB's in 5GS/gNB/ng-eNB.

In another or alternative embodiment of the present disclosure, at interworking handover from 5GS to EPS, the network may ensure that the DRB's for this particular PDU session which the network has activated UP integrity protection, can be handed over to another system as EPS which can ensure that the UP integrity protection can be activated for the DRB's in EPS/LTE.

Operational advantages that may be provided by one or more embodiments of the present disclosure may include that a PDN connection which the network has activated UP integrity protection for the DRB's in EPS/LTE can be handed over to 5GS with a continuation of having UP integrity protection activated for the DRB's established with the UE.

Additional operational advantages that may be provided by one or more embodiments of the present disclosure may further include that a PDU session which the network has activated UP integrity protection for the DRB's in 5GS, can be handed over to EPS with a continuation of having UP integrity protection activated for the DRB's established with the UE.

A handover procedure from EPS to 5GS, e.g. over N26, in accordance with various embodiments of the present disclosure is now discussed.

A source MME can receive from a UE the following indications in, e.g., either an Attach Request message or a Tracking Area Update Request message: UE support of UP IP over E-UTRA connected to 5GC and/or UE support of UP IP over E-UTRA connected to EPS. The source MME can have these capabilities stored as capability indications at reception of, e.g., an Attach Request or a Tracking Area Update Request message from the UE.

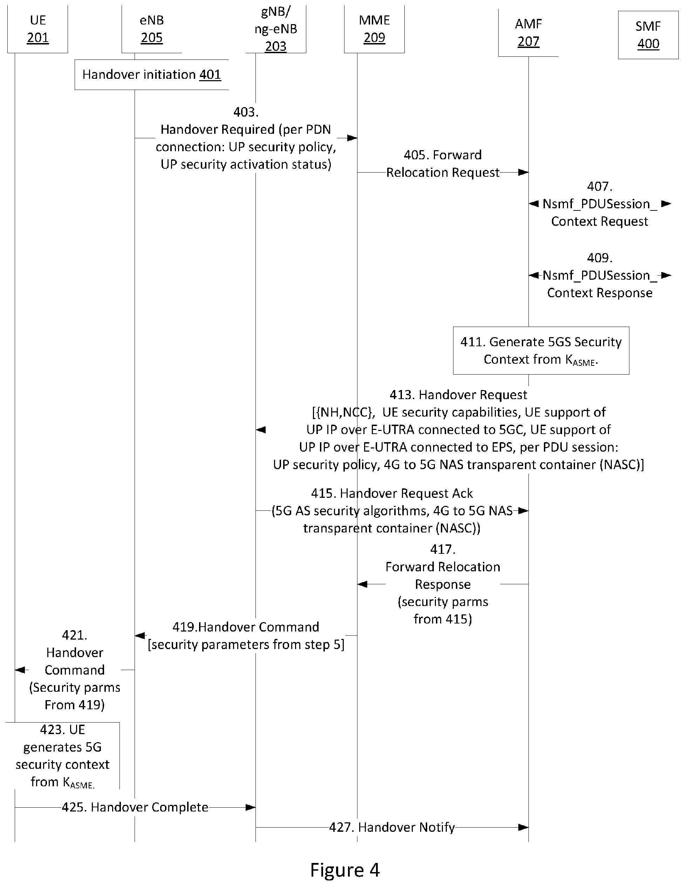

Figure 4 is a signalling diagram for interworking handover from an EPS to 5GS in a radio access network, e.g. over N26, according to some embodiments of the present disclosure. In the non-limiting illustrative embodiment of Figure 4, network devices include a UE 201, eNB 205, gNB/ng-eNB 203, MME 209, AMF 207 and SMF 400.

As shown in Figure 4, at 401, eNB 205 initiates a handover.

At 403, the source eNB 205 sends a Handover Required message to the source MME 209, including UE's 201 identity . The source eNB 205 also includes a UP security policy and the UP security activation status per each PDN connected, it has activated and established with UE 201. Source MME 209 can check whether the UE's 201 security capabilities and access rights are valid in order to decide whether it can initiate handover to 5GS.

At 405, source MME 209 selects target AMF 207 and sends a Forward Relocation Request to the selected target AMF 207. If source MME 209 has the UE 201 NR security capabilities stored, then MME 209 will forward the UE 201 NR security capabilities as well to target AMF 207. Source MME 209 forwards the following information received from source eNB 205: the UP security policy and the UP security activation status per each PDN connected, the source eNB 205/source MME 209 has activated and established with UE 201, to target AMF 207.

Source MME 209 forwards as well the UE 201 capability indications: UE support of UP IP over E-UTRA connected to 5GC and/or UE support of UP IP over E-UTRA connected to EPS, to target AMF 207.

At 407, target/initial AMF 207 invokes a Nsmf_PDUSession_CreateSMContext service operation (UE EPS PDN Connection, initial AMF ID, data Forwarding information, Target ID) on SMF 400 identified by a packet data network gateway control plane and SMF (PGW-C+SMF) address and indicates Handover (HO) Preparation Indication (to avoid switching the UP path). The initial AMF ID uniquely identifies the initial AMF 207 serving UE 201. This operation is performed for each PDN Connection and the corresponding PGW-C+SMF address/ID in the UE context for the initial AMF received in operation 405. SMF 400 finds the corresponding PDU Session based on EPS Bearer Context(s).

Target/initial AMF 207 includes the UP security policy per each EPS PDN connection, received from source MME 209, to SMF 400.

At 409, SMF 400 maps the EPS PDN connections to PDU sessions. SMF 400 assigns and maps the UP security policy for the PDN connection to the PDU session.

The PGW-C+SMF (default visitor SMF (V-SMF) in the case of home-routed roaming scenario only) sends a Nsmf_PDUSession_CreateSMContext Response (PDU Session ID, S-NSSAI, N2 SM Information (PDU Session ID, S-NSSAI, QFI(s), QoS Profile(s), EPS Bearer Setup List, Mapping between EBI(s) and QFI(s), CN Tunnel-Info, cause code)) to target/initial AMF 207.

At 411, target AMF 207 generates 5GS security context from Kasme.

At 413, target AMF 207, requests target gNB/ng-eNB 203 to establish the bearer(s) by sending the Handover Request message. Target AMF 207 forwards the following information received from source eNB 205: the UP security policy and the UP security activation status per each PDN connected and/or the source eNB 205/source MME 209 has activated and established with UE 201, to target ng-eNB 203 or target gNB 203.

Target AMF 207 forwards as well the UE 201 capability indications: UE support of UP IP over E-UTRA connected to 5GC and/or UE support of UP IP over E-UTRA connected to EPS, to target ng-eNB 203 or target gNB 203.

UP security activation status indicates whether UP integrity protection was activated or not in the source cell ("UP integrity protection is activated", or; "UP integrity protection is not activated").

If the UP security activation status can be supported in target gNB/ng-eNB 203, target gNB/ng-eNB 203 can use the UP security activations that UE 201 used at the last source cell.

In addition, target ng-eNB 201 can take into account the UE capability named: UE support of UP IP over E-UTRA connected to 5GC, when activating UP integrity protection. Target ng-eNB 203, can only activate UP integrity protection with the UE 201, if the UE capability (e.g., named UE support of UP IP over E-UTRA connected to 5GC), indicates that the UE supports UP integrity protection.

Additionally, as support of UP IP is mandatory in a Rel-15 UE and a Rel-15 gNB connected to an AMF, target gNB 203 does not need to take any UE capability into account when determining whether to activate UP IP or not with the UE. The only UE capability to consider is the UE Integrity Protection Maximum Data Rate which is specified in 3GPP Rel-15 specifications.

In another or alternative embodiment, optional error handling operations may be included. In one embodiment, if the UP security policy allows a different UP security activation status, e.g. UP security policy = "Preferred" and UP activations status is "UP integrity protection is activated", then target gNB /ng-eNB 203 can change the UP activations status to "UP integrity protection is not activated".

In yet another or alternative embodiment of optional error handling operations, if target gNB/ng-eNB 203 cannot comply with the UP activation status or if the UE capability (e.g., named UE support of UP IP over E-UTRA connected to 5GC), indicates that UE 201 does not support UP integrity protection, then target gNB/ng-eNB 203 can reject the Handover Request received from target AMF 207.

At 415, target gNB/ng-eNB 203 sends a Handover Request Ack message to target AMF 207.

At 417, target AMF 207 sends the Forward Relocation Response message to source MME 209. The required security parameters obtained from gNB/ng-eNB 203 in operation 415 as the Target to Source Container are forwarded to source MME 209.

At 419 and 421, source MME 209 sends the Handover Command to source eNB 205. Source eNB 205 commands UE 201 to handover to the target 5G network by sending the Handover Command.

At 423, UE 201 derives a mapped K_{AMF'} key from the K_{ASME} in the same way AMF 207 did in operation 411.

At 425, UE 201 sends the Handover Complete message to target gNB/ng-eNB 203. This can be ciphered and integrity protected by the AS keys in the current 5G security context.

At 427, target gNB/ng-eNB 203 notifies target AMF 207 with a Handover Notify message.

Handling of security contexts in the case of multiple active NAS connections in the same public land mobile network's (PLMN's) serving network is described in 3GPP TS 23.502 (V 16.5.1), clause 6.4.2.2.

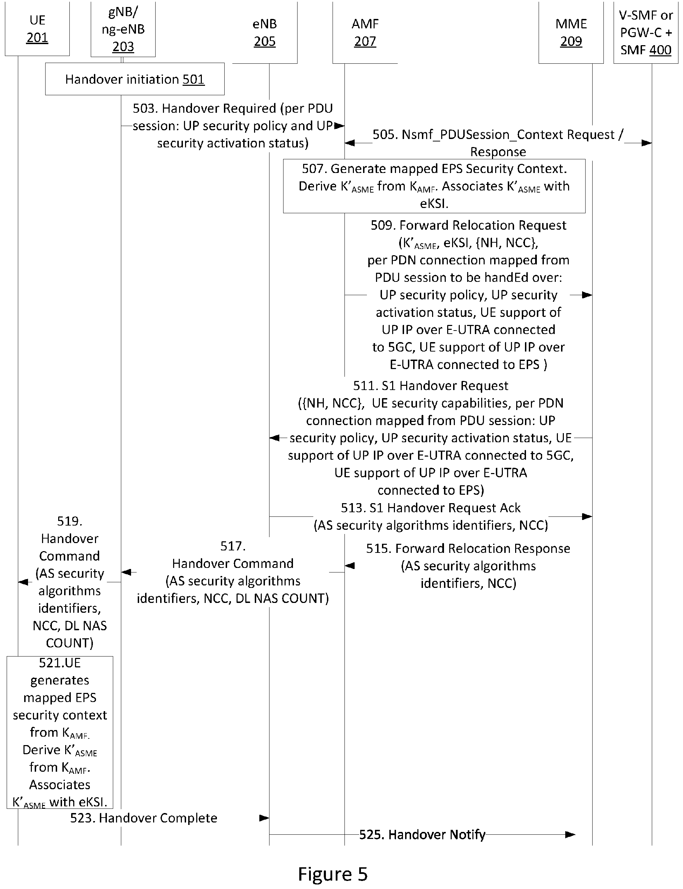

Figure 5 is a signalling diagram for interworking handover from an 5GS to EPS in a radio access network, e.g., over N26, according to some embodiments of the present disclosure. In the non-limiting illustrative embodiment of Figure 5, network devices include a UE 201, eNB 205, gNB/ng-eNB 203, MME 209, AMF 207 and V-SMF or PGW-C + SMF 400.

Source AMF 207 has received from UE 201 the following capability indications in, e.g., a Registration Request message: UE support of UP IP over E-UTRA connected to 5GC and/or UE support of UP IP over E-UTRA connected to EPS. Source AMF 207 can have these capabilities stored as capability indications at reception of, e.g., a Registration Request message from UE 201.

As shown in Figure 5, at 501, gNB/ng-eNB 203 initiates a handover.

At 503, gNB/ng-eNB 203 sends a Handover Required message to AMF 207, including UE's 201 identity . Source gNB/ng-eNB 203 can also include a UP security policy and the UP security activation status per each PDU session, it has activated and established with UE 201 and which are to be handed over to EPS.

At 505, AMF 207 determines from, e.g. the 'Target eNB Identifier' IE that the type of handover is Handover to E-UTRAN.

AMF 207 determines for a PDU Session whether to retrieve context including mapped UE EPS PDN Connection from the V-SMF (in the case of HR roaming) or the PGW-C+SMF (in the case of non-roaming or local breakout (LBO) roaming).

At 507, when source AMF 207 performs a handover procedure to the EPC, after checking UE's 201 access rights and security capabilities, source AMF 207 can prepare a UE context including a mapped EPS security context for target MME 209.

At 509, source AMF 207 can transfer the UE security context (including new K_{ASME'}, eKSI, uplink and downlink EPS NAS COUNT's, UE EPS security capabilities, selected EPS NAS algorithms identifiers) to target MME 209 in a Forward Relocation Request message. The UE NR security capabilities may be sent by source AMF 207 as well.

The PDU sessions are mapped to PDN connections. AMF 207 includes the mapped SM EPS UE Contexts for PDU Sessions with and without active UP connections. Source AMF 207 forwards information received from source ng-eNB/gNB 203: the UP security policy and the UP security activation status per each PDU session (mapped to PDN connections in EPS), which source ng-eNB 203/source AMF 207 or the source gNB 203/source AMF 207 has activated and established with UE 201, to be handed over to target MME 209.

Source AMF 207 can also forward the UE capability indications: UE support of UP IP over E-UTRA connected to 5GC and/or UE support of UP IP over E-UTRA connected to EPS, to target MME 209.

At 511, when target MME 209 receives Forward Relocation Request message from source AMF 207, then target MME 209 can derive EPS NAS keys (i.e., K_{NASenc} and K_{NASint}) from the received K_{ASME'} key with the received EPS NAS security algorithm identifiers as input, to be used in EPC as described in Annex A.7 in 3GPP TS 33.401 (V 16.3.0).

Target MME 209 forwards information received from source AMF 207 to target LTE eNB 205 per each PDN connection mapped from a PDU session: e.g., the UP security policy and the UP security activation status per each PDU session, which source ng-eNB203/source AMF 207 or the source gNB 203/source AMF 207 has activated and established with UE 201.

Target MME 209 can also forward the UE capability indications to target LTE eNB 205: UE support of UP IP over E-UTRA connected to 5GC and/or UE support of UP IP over E-UTRA connected to EPS.

UP security activation status indicates whether UP integrity protection was activated or not in the source cell ("UP integrity protection is activated" and/or "UP integrity protection is not activated").

Target eNB 205 can establish E-UTRAN radio access bearers (E-RABs) indicated by a list of EPS bearer to be setup provided by target MME 209.

If the UP security activation status can be supported in target LTE eNB 205, target LTE eNB 205 can use the UP security activations that UE 201 used at the last source cell.

In addition, target LTE eNB 205 can take into account the UE capability: UE support of UP IP over E-UTRA connected to EPS, when activating UP integrity protection. Target LTE eNB 205 may only activate UP integrity protection with UE 201 if the UE capability (e.g., named UE support of UP IP over E-UTRA connected to EPS) indicates that UE 201 supports UP integrity protection.

In another or alternative embodiment, optional error handling operations may be included. In one embodiment, if the UP security policy allows a different UP security activation status, e.g. UP security policy = "Preferred" and UP activations status is "UP integrity protection is activated", then target LTE eNB 205 can change the UP activations status to "UP integrity protection is not activated".

In another or alternative embodiment, optional error handling operations may be included. In one embodiment, if target LTE eNB 205 cannot comply with the UP activation status or if the UE capability, e.g., named UE support of UP IP over E-UTRA connected to EPS, indicates that the UE does not support UP integrity protection, then target LTE eNB 205 can reject the Handover Request received from target MME 209.

At 513, upon receipt of a S1 HANDOVER REQUEST from target MME 209, target LTE eNB 205 selects AS security algorithms from the UE EPS security capabilities as described in clause 7.2.4.2.3 in 3GPP TS 33.401 (V 16.3.0)and computes the KeNB to be used with the UE and proceeds as described in clause 7.2.8.4.3 in 3GPP TS 33.401 (V 16.3.0). Target LTE eNB 205 then sends the selected AS security algorithms in the target to source transparent container in the S1 Handover Request Ack Message to target MME 209.

At 515, target MME 209 can include the target to source transparent container received from target LTE eNB 205 in the Forward Relocation Response message sent to source AMF 207.

At 517, source AMF 207 can include the target to source transparent container and the 8 LSB of the downlink NAS COUNT value used in K_{ASME'} derivation in operation 507, in the Handover command sent to source gNB/ng-eNB 203.

At 519, source gNB/ng-eNB 203 can include the target to source transparent container and the 8 LSB of the downlink NAS COUNT value in the Handover command sent to UE 201.

At 521, the eKSI for the newly derived K_{ASME'} key is defined as described in clause 8.6.1 of the 3GPP TS. UE 201 can also derive the EPS NAS keys (i.e. K_{NASenc} and K_{NASint}) as MME 209 did in operation 511 using the EPS NAS security algorithms identifiers stored in MME 209 and provisioned by AMF 207 to UE 201 in 5G NAS SMC in earlier 5G access. UE 201 can also derive the initial KeNB from the K_{ASME'} and the uplink NAS COUNT as specified in Annex A.3 of 3GPP TS 33.401 (V 16.3.0) using 232-1 as the value of the uplink NAS COUNT parameter.

At 523, UE 201 sends the Handover Complete message to target LTE eNB 205. UE 201 can cipher and integrity protect this message using the newly created mapped EPS security context.

At 525, target LTE eNB 205 notifies target MME 209 with a Handover Notify message.

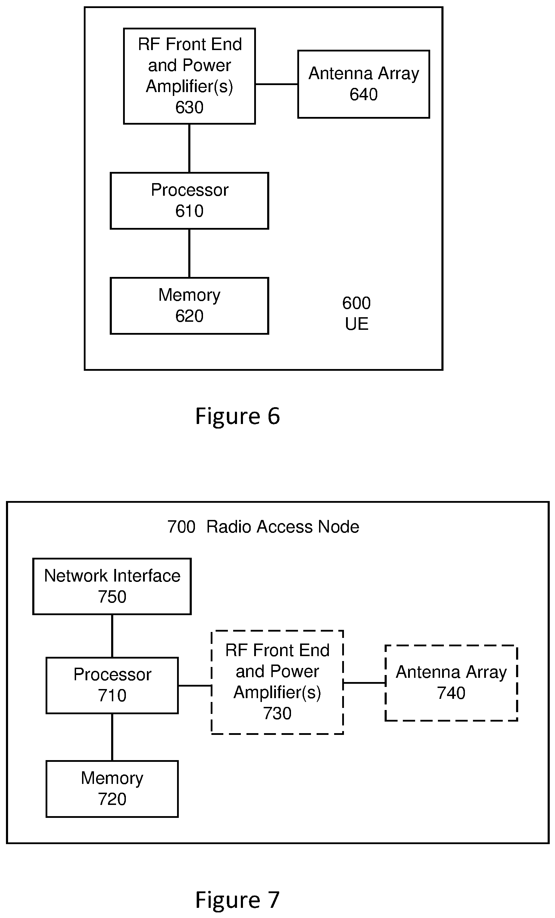

Figure 6 is a block diagram illustrating a UE 600 that is configured according to some embodiments. The UE 600 can include, without limitation, a wireless terminal, a wireless communication device, a wireless communication terminal, a terminal node/UE/device, etc. The UE 600 includes a RF front-end 630 comprising one or more power amplifiers the transmit and receive through antennas of an antenna array 640 to provide uplink and downlink radio communications with a radio network node (e.g., a base station, eNB, gNB, a ng-eNB, etc.) of a telecommunications network. UE 600 further includes a processor circuit 610 (also referred to as a processor) coupled to the RF front end 630 and a memory circuit 620 (also referred to as memory). The memory 620 stores computer readable program code that when executed by the processor 610 causes the processor 610 to perform operations according to embodiments disclosed herein.

Figure 7 is a block diagram illustrating a radio access node 700 (e.g., a base station, eNB, gNB, a ng-eNB, a source node, a target, a master node, a secondary node, etc.) of a radio access network (e.g., a 5G radio access network). The radio access node 700 includes a processor circuit 710 (also referred to as a processor), a memory circuit 720 (also referred to as memory), and a network interface 750 (e.g., wired network interface and/or wireless network interface) configured to communicate with other network nodes. The radio access node 700 may be configured as a radio network node containing a RF front end with one or more power amplifiers 730 that transmit and receive through antennas of an antenna array 740. The memory 720 stores computer readable program code that when executed by the processor 710 causes the processor 710 to perform operations according to embodiments disclosed herein.

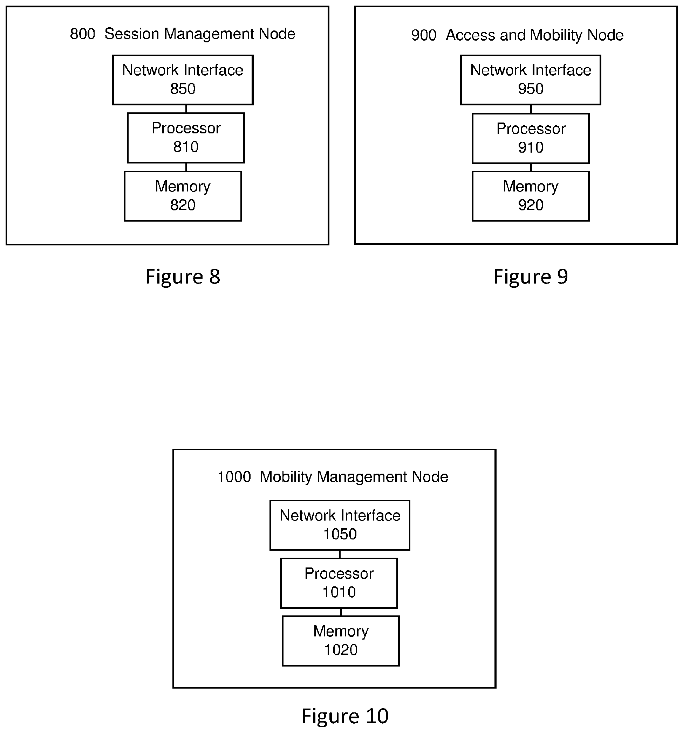

Figure 8 is a block diagram illustrating a session management node 800 (e.g., a SMF, a source SMF, a target SMF, etc.) of a radio access network (e.g., a 5G radio access network). The session management node 800 includes a processor circuit 810 (also referred to as a processor), a memory circuit 820 (also referred to as memory), and a network interface 850 (e.g., wired network interface and/or wireless network interface) configured to communicate with other network nodes. The memory 820 stores computer readable program code that when executed by the processor 810 causes the processor 810 to perform operations according to embodiments disclosed herein.

Figure 9 is a block diagram illustrating an access and mobility node 900 (e.g., a AMF, a source AMF, a target AMF, etc.) of a radio access network (e.g., a 5G radio access network). The access and mobility node 900 includes a processor circuit 910 (also referred to as a processor), a memory circuit 920 (also referred to as memory), and a network interface 950 (e.g., wired network interface and/or wireless network interface) configured to communicate with other network nodes. The memory 920 stores computer readable program code that when executed by the processor 910 causes the processor 910 to perform operations according to embodiments disclosed herein.

Figure 10 is a block diagram illustrating a mobility management node 1000 (e.g., a MME, a source MME, a target MME, etc.) of a radio access network (e.g., a 5G radio access network). The mobility management node 1000 includes a processor circuit 1010 (also referred to as a processor), a memory circuit 1020 (also referred to as memory), and a network interface 1050 (e.g., wired network interface and/or wireless network interface) configured to communicate with other network nodes. The memory 1020 stores computer readable program code that when executed by the processor 1010 causes the processor 1010 to perform operations according to embodiments disclosed herein.

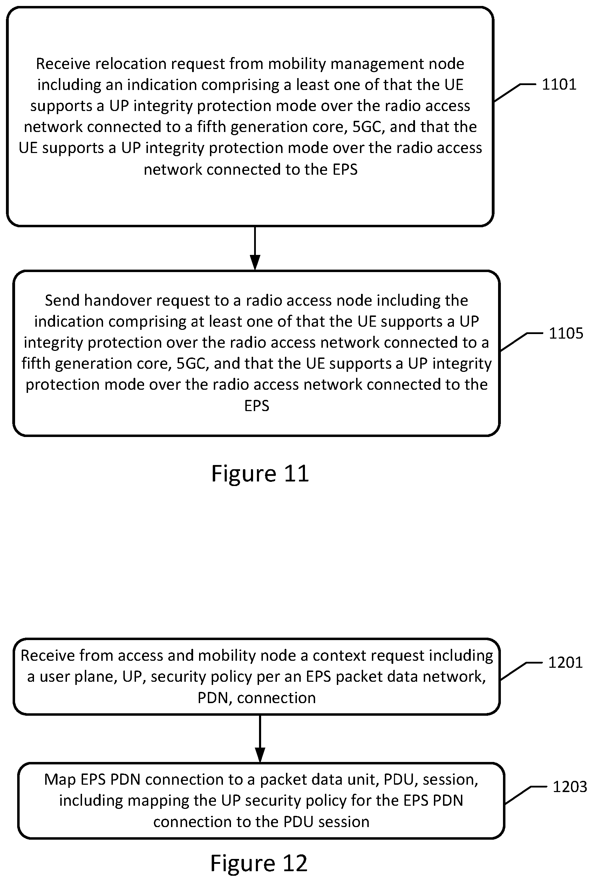

Now that the operations that the various components have been described, operations specific to devices of a radio access network (implemented using the structures of the block diagrams of Figures 7-10) for performing interworking handover from an evolved packet system, EPS, to a fifth generation system, 5GS, in a radio access network and/or for interworking handover from a fifth generation system, 5GS, to an evolved packet system, EPS, in a radio access network will now be discussed with reference to the flow charts of Figures 11-17 according to various embodiments of the present disclosure. For example, modules may be stored in memory 720 of radio access node (RAN) 700 of Figure 7, in memory 820 of session management node (SMF) 800 of Figure 8, in memory 920 of access and mobility node (AMF) 900 of Figure 9, and/or in memory 1020 of mobility management node (MME) 1000 of Figure 10. These modules may provide instructions so that when the instructions of a module are executed by respective computer processing circuitry 710, 810, 910, and/or 1010, the processing circuitry performs respective operations of the flow charts. Each of the operations described in Figures 11-17 can be combined and/or omitted in any combination with each other, and it is contemplated that all such combinations fall within the spirit and scope of this disclosure.

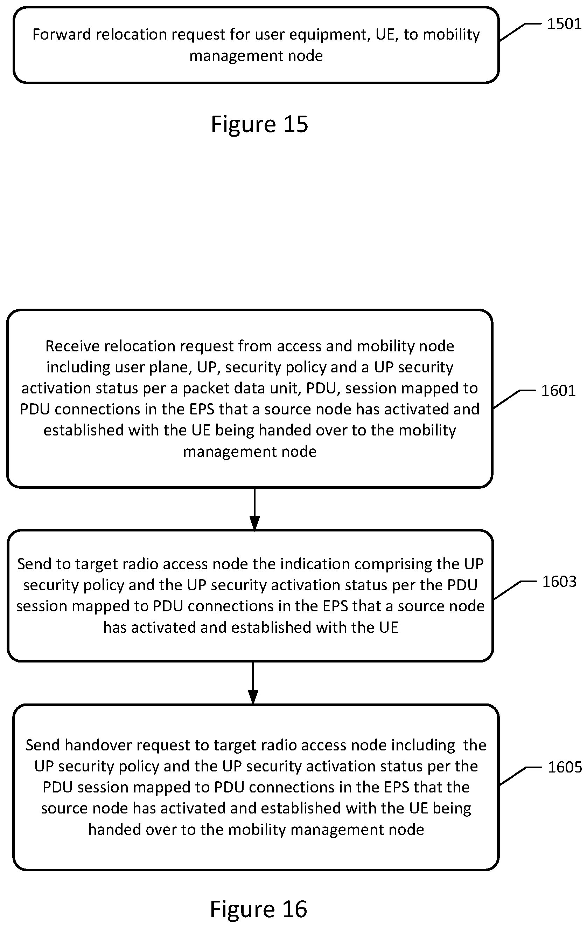

The flow charts of Figures 11-14 provide operations for performing interworking handover from an evolved packet system, EPS, to a fifth generation system, 5GS, in a radio access network. The flow charts of Figures 15-17 provide operations for performing interworking handover from a fifth generation system, 5GS, to an evolved packet system, EPS, in a radio access network.

Referring first to Figure 11, a method performed by an AMF (e.g., implemented using the structure of the block diagram of Figure 9) for interworking handover from an evolved packet system, EPS, to a fifth generation system, 5GS, in a radio access network is provided. The method includes receiving (1101) a relocation request from a mobility management node. The relocation request includes an indication comprising a least one of that the UE supports a UP integrity protection mode over the radio access network connected to a fifth generation core, 5GC, and that the UE supports a UP integrity protection mode over the radio access network connected to the EPS. The method further includes sending (1105) a handover request to a radio access node. The handover request includes the indication comprising at least one of that the UE supports a UP integrity protection over the radio access network connected to a fifth generation core, 5GC, and that the UE supports a UP integrity protection mode over the radio access network connected to the EPS.

In some embodiments, the relocation request further includes information comprising a user plane, UP, security policy per an EPS packet data network, PDN, connection that the radio access node and the mobility management node have established with a user equipment, UE.

In some embodiments, the method includes further operations including sending (1103) to a session management node a context request comprising the UP security policy per the EPS PDN connection.

In some embodiments, the relocation request further includes a UP security activation status per the EPS PDN connection.

In some embodiments, the UP security activation status comprises an indication of one of: the UP integrity protection was activated in a source cell; and the UP integrity protection was not activated in the source cell.

In some embodiments, the radio access node is an evolved long term evolution radio access node.

Referring next to Figure 12, a method performed by an SMF (e.g., implemented using the structure of the block diagram of Figure 8) for interworking handover from an evolved packet system, EPS, to a fifth generation system, 5GS, in a radio access network is provided. The method includes receiving (1201) from an access and mobility node a context request including a user plane, UP, security policy per an EPS packet data network, PDN, connection. The method further includes mapping (1203) the EPS PDN connection to a packet data unit, PDU, session. The mapping includes the UP security policy for the EPS PDN connection to the PDU session.

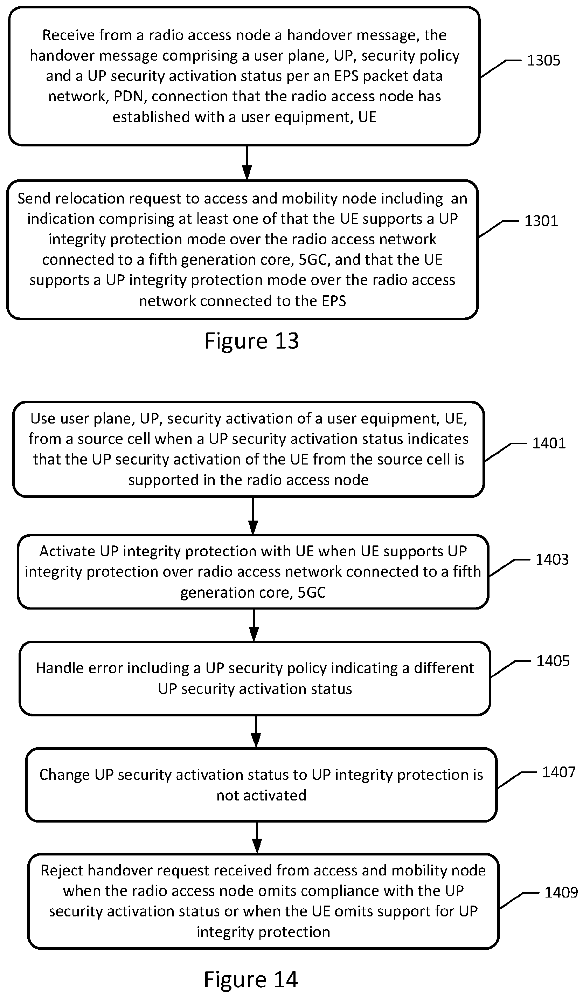

Referring next to Figure 13, a method performed by an MME (e.g., implemented using the structure of the block diagram of Figure 10) for interworking handover from an evolved packet system, EPS, to a fifth generation system, 5GS, in a radio access network is provided. The method includes sending (1301) a relocation request to an access and mobility node. The relocation request includes an indication comprising at least one of that the UE supports a UP integrity protection mode over the radio access network connected to a fifth generation core, 5GC, and that the UE supports a UP integrity protection mode over the radio access network connected to the EPS. The method further includes receiving (1303) a relocation response message from the access and mobility node.

In some embodiments, the relocation request further includes information comprising a user plane, UP, security policy per a connected packet data network, PDN, that the radio access node and the mobility management node have established with a user equipment, UE.

In some embodiments, the relocation request further includes a UP security activation status per the EPS PDN connection that the radio access node has established with the UE.

In some embodiments, the UP security activation status comprises an indication of one of: the UP integrity protection was activated in a source cell; and the UP integrity protection was not activated in the source cell.

In some embodiments, the radio access node is an evolved long term evolution radio access node.

Referring next to Figure 14, a method performed by a radio access node (e.g., implemented using the structure of the block diagram of Figure 7) for interworking handover from an evolved packet system, EPS, to a fifth generation system, 5GS, in a radio access network is provided. The method includes using (1401) a user plane, UP, security activation of a user equipment, UE, from a source cell when a UP security activation status indicates that the UP security activation of the UE from the source cell is supported in the radio access node. The method further includes activating (1403) UP integrity protection with the UE when the UE supports UP integrity protection over the radio access network connected to a fifth generation core, 5GC.

In some embodiments, the method includes further operations including handling (1405) an error. The error includes a UP security policy indicating a different UP security activation status. The operations further include changing (1407) the UP security activation status to UP integrity protection is not activated.

In some embodiments, the method includes further operations including rejecting (1409) a handover request received from an access and mobility node when the radio access node omits compliance with the UP security activation status or when the UE omits support for UP integrity protection.

In some embodiments, the radio access node is an evolved long term evolution radio access node.

Referring now to Figure 15, a method performed by an AMF (e.g., implemented using the structure of the block diagram of Figure 9) for interworking handover from a fifth generation system, 5GS, to an evolved packet system, EPS, in a radio access network is provided. The method includes forwarding (1501) a relocation request for a user equipment, UE, to a mobility management node comprising a user plane, UP, security context. The method further includes mapping (1503) a packet data unit, PDU, session to a packet data network, PDN, session based on the UP security context. The mapping includes an EPS UE context for the UE for the PDU session with an active UP connection and for the PDU session omitting an active UP connection.

In some embodiments, the UP security context comprises a UP security activation status.

In some embodiments, the UP security activation status includes an indication comprising a least one of that the UE supports a UP integrity protection mode over the radio access network connected to a fifth generation core, 5GC, and that the UE supports a UP integrity protection mode over the radio access network connected to the EPS.

Referring now to Figure 16, a method performed by an MME (e.g., implemented using the structure of the block diagram of Figure 10) for interworking handover from a fifth generation system, 5GS, to an evolved packet system, EPS, in a radio access network is provided. The method includes receiving (1601) a relocation request from an access and mobility node. The relocation request includes an indication comprising a least one of that the UE supports a UP integrity protection mode over the radio access network connected to a fifth generation core, 5GC, and that the UE supports a UP integrity protection mode over the radio access network connected to the EPS. The method further includes sending (1605) a handover request to a target radio access node. The handover request includes the indication comprising at least one of that the UE supports a UP integrity protection over the radio access network connected to a fifth generation core, 5GC, and that the UE supports a UP integrity protection mode over the radio access network connected to the EPS.

In some embodiments, the relocation request further includes information comprising a user plane, UP, security policy per an EPS packet data network, PDN, connection mapped from a packet data unit, PDU, session that a source radio access node or a source core node established with a user equipment, UE.

In some embodiments, the method includes further operations including sending (1603) to the target radio access node the indication including at least one of that the UE supports a UP integrity protection over the radio access network connected to a fifth generation core, 5GC, and that the UE supports a UP integrity protection mode over the radio access network connected to the EPS.

In some embodiments, the handover request further comprises a UP security activation status.

In some embodiments, the UP security activation status comprises an indication of one of: the UP integrity protection was activated in a source cell; and the UP integrity protection was not activated in the source cell.

In some embodiments, the radio access node is a long term evolution Node B.

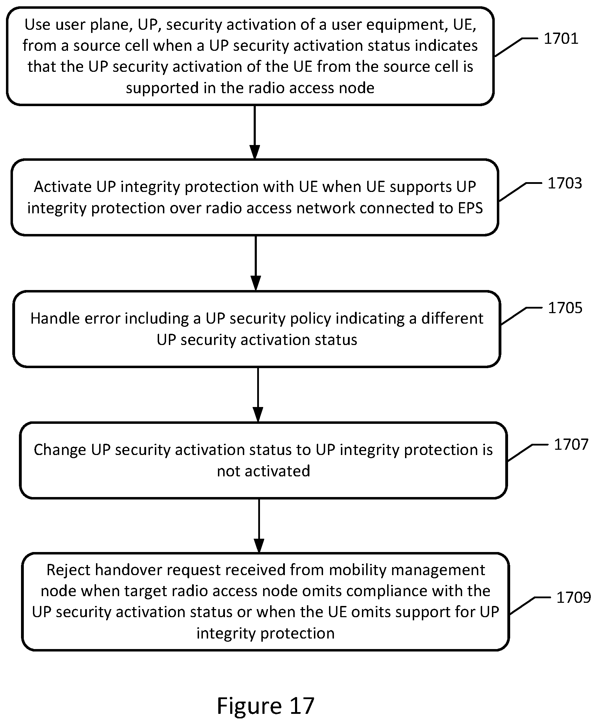

Referring now to Figure 17, a method performed by an target radio access node (e.g., implemented using the structure of the block diagram of Figure 7) for interworking handover from a fifth generation system, 5GS, to an evolved packet system, EPS, in a radio access network is provided. The method includes using (1701) a user plane, UP security activation of a user equipment, UE, from a source cell when a UP security activation status indicates that the UP security activation of the UE from the source cell is supported in the radio access node. The method further includes activating (1703) UP integrity protection with the UE when the UE supports UP integrity protection over the radio access network connected to the EPS.

In some embodiments, the method includes further operations including handling (1705) an error. The error includes a UP security policy indicating a different UP security activation status. The operations further include changing (1707) the UP security activation status to UP integrity protection is not activated.

In some embodiments, the method includes further operations including rejecting (1709) a handover request received from a mobility management node when the target radio access node omits compliance with the UP security activation status or when the UE omits support for UP integrity protection.

In some embodiments, the target radio access node is a long term evolution eNode B.

Various operations from the flow charts of Figures 11-17 may be optional with respect to some embodiments. For example, operations of block 1103 of Figure 11 may be optional, and operations of blocks 1405-1409 of Figure 14 may be optional. Additionally, for example, operations of block 1603 of Figure 16 may be optional, and operations of blocks 1705-1709 of Figure 17 may be optional.

Example Embodiments are discussed below. Reference numbers/letters are provided in parenthesis by way of example/illustration without limiting example embodiments to particular elements indicated by reference numbers/letters.

Embodiment 1. A method performed by an access and mobility node for interworking handover from an evolved packet system, EPS, to a fifth generation system, 5GS, in a radio access network is provided. The method comprises receiving (1101) a relocation request from a mobility management node. The relocation request comprises an indication comprising a least one of that the UE supports a UP integrity protection mode over the radio access network connected to a fifth generation core, 5GC, and that the UE supports a UP integrity protection mode over the radio access network connected to the EPS. The method further comprises sending (1105) a handover request to a radio access node. The handover request comprises the indication comprising at least one of that the UE supports a UP integrity protection over the radio access network connected to a fifth generation core, 5GC, and that the UE supports a UP integrity protection mode over the radio access network connected to the EPS.

Embodiment 2. The method of Embodiment 1, wherein the relocation request further comprises information comprising a user plane, UP, security policy per an EPS packet data network, PDN, connection that the radio access node and the mobility management node have established with a user equipment, UE.

Embodiment 3. The method of any of Embodiments 1 to 2, further comprising sending (1103) to a session management node a context request comprising the UP security policy per the EPS PDN connection.

Embodiment 4. The method of any of Embodiments 1 to 3, wherein the relocation request further comprises a UP security activation status per the EPS PDN connection.

Embodiment 5. The method of Embodiment 4, wherein the UP security activation status comprises an indication of one of: the UP integrity protection was activated in a source cell; and the UP integrity protection was not activated in the source cell.

Embodiment 6. The method of any of Embodiments 1 to 5, wherein the radio access node is an evolved long term evolution radio access node.

Embodiment 7. A method performed by a session management node for interworking handover from an evolved packet system, EPS, to a fifth generation system, 5GS, in a radio access network is provided. The method comprising receiving (1201) from an access and mobility node a context request comprising a user plane, UP, security policy per an EPS packet data network, PDN, connection. The method further comprises mapping (1203) the EPS PDN connection to a packet data unit, PDU, session, wherein the mapping comprises the UP security policy for the EPS PDN connection to the PDU session.

Embodiment 8. A method performed by a mobility management node for interworking handover from an evolved packet system, EPS, to a fifth generation system, 5GS, in a radio access network is provided. The method comprising sending (1301) a relocation request to an access and mobility node. The relocation request comprises an indication comprising at least one of that the UE supports a UP integrity protection mode over the radio access network connected to a fifth generation core, 5GC, and that the UE supports a UP integrity protection mode over the radio access network connected to the EPS. The method further comprises receiving (1303) a relocation response message from the access and mobility node.

Embodiment 9. The method of Embodiment 8, wherein the relocation request further comprises information comprising a user plane, UP, security policy per a connected packet data network, PDN, that the radio access node and the mobility management node have established with a user equipment, UE.

Embodiment 10. The method of Embodiment 7, wherein the relocation request further comprises a UP security activation status per the EPS PDN connection that the radio access node has established with the UE.

Embodiment 11. The method of Embodiment 10, wherein the UP security activation status comprises an indication of one of the UP integrity protection was activated in a source cell; and the UP integrity protection was not activated in the source cell.

Embodiment 12. The method of any of Embodiments 8 to 11, wherein the radio access node is an evolved long term evolution radio access node.

Embodiment 13. A method performed by a radio access node for interworking handover from an evolved packet system, EPS, to a fifth generation system, 5GS, in a radio access network is provided. The method comprising using (1401) a user plane, UP, security activation of a user equipment, UE, from a source cell when a UP security activation status indicates that the UP security activation of the UE from the source cell is supported in the radio access node. The method further comprises activating (1403) UP integrity protection with the UE when the UE supports UP integrity protection over the radio access network connected to a fifth generation core, 5GC.

Embodiment 14. The method of Embodiment 13, further comprising handling (1405) an error. The error comprises a UP security policy indicating a different UP security activation status. The method further comprises changing (1407) the UP security activation status to UP integrity protection is not activated.

Embodiment 15. The method of any of Embodiments 13 to 14, further comprising rejecting (1409) a handover request received from an access and mobility node when the radio access node omits compliance with the UP security activation status or when the UE omits support for UP integrity protection.

Embodiment 16. The method of any of Embodiments 13 to 15, wherein the radio access node is an evolved long term evolution radio access node.

Embodiment 17. An access and mobility node (900) for interworking handover from an evolved packet system, EPS, to a fifth generation system, 5GS, in a radio access network is provided. The access and mobility node comprising a processor (910); and a memory (920) coupled to the processor. The memory stores instructions that when executed by the processor causes the processor to perform operations according to any of Embodiments 1 to 6.

Embodiment 18. A computer program product, comprising a non-transitory computer readable storage medium comprising computer readable program code embodied in the medium that when executed by a processor (910) of an access and mobility node (900) causes the processor to perform operations according to any of Embodiments 1 to 6.

Embodiment 19. A session management node (800) for interworking handover from an evolved packet system, EPS, to a fifth generation system, 5GS, in a radio access network is provided. The session management node comprising a processor (810); and a memory (820) coupled to the processor. The memory stores instructions that when executed by the processor causes the processor to perform operations according to Embodiment 7.

Embodiment 20. A computer program product, comprising a non-transitory computer readable storage medium comprising computer readable program code embodied in the medium that when executed by a processor (810) of a session management node (800) causes the processor to perform operations according to Embodiment 7.

Embodiment 21. A mobility management node (1000) for interworking handover from an evolved packet system, EPS, to a fifth generation system, 5GS, in a radio access network is provided. The mobility management node comprising a processor (1010); and a memory (1020) coupled to the processor. The memory stores instructions that when executed by the processor causes the processor to perform operations according to any of Embodiments 8 to 12.

Embodiment 22. A computer program product, comprising a non-transitory computer readable storage medium comprising computer readable program code embodied in the medium that when executed by a processor (1010) of a mobility management node (1000) causes the processor to perform operations according to any of Embodiments 8 to 12.

Embodiment 23. A radio access node (700) for interworking handover from an evolved packet system, EPS, to a fifth generation system, 5GS, in a radio access network is provided. The radio access node comprising a processor (710); and a memory (720) coupled to the processor. The memory stores instructions that when executed by the processor causes the processor to perform operations according to any of Embodiments 13 to 16.

Embodiment 24. A computer program product, comprising a non-transitory computer readable storage medium comprising computer readable program code embodied in the medium that when executed by a processor (710) of a radio access node (700) causes the processor to perform operations according to any of Embodiments 13 to 26.

Embodiment 25. A method performed by an access and mobility node for interworking handover from a fifth generation system, 5GS, to an evolved packet system, EPS, in a radio access network is provided. The method comprising forwarding (1501) a relocation request for a user equipment, UE, to a mobility management node comprising a user plane, UP, security context. The method further comprises mapping (1503) a packet data unit, PDU, session to a packet data network, PDN, session based on the UP security context. The mapping comprises an EPS UE context for the UE for the PDU session with an active UP connection and for the PDU session omitting an active UP connection.

Embodiment 26. The method of Embodiment 25, wherein the UP security context comprises a UP security activation status.

Embodiment 27. The method of Embodiment 26, wherein the UP security activation status comprises an indication comprising a least one of that the UE supports a UP integrity protection mode over the radio access network connected to a fifth generation core, 5GC, and that the UE supports a UP integrity protection mode over the radio access network connected to the EPS.

Embodiment 28. A method performed by a mobility management node for interworking handover from a fifth generation system, 5GS, to an evolved packet system, EPS, in a radio access network is provided. The method comprising receiving (1601) a relocation request from an access and mobility node. The relocation request comprises an indication comprising a least one of that the UE supports a UP integrity protection mode over the radio access network connected to a fifth generation core, 5GC, and that the UE supports a UP integrity protection mode over the radio access network connected to the EPS. The method further comprises sending (1605) a handover request to a target radio access node. The handover request comprises the indication comprising at least one of that the UE supports a UP integrity protection over the radio access network connected to a fifth generation core, 5GC, and that the UE supports a UP integrity protection mode over the radio access network connected to the EPS.

Embodiment 29. The method of Embodiment 28, wherein the relocation request further comprises information comprising a user plane, UP, security policy per an EPS packet data network, PDN, connection mapped from a packet data unit, PDU, session that a source radio access node or a source core node established with a user equipment, UE.

Embodiment 30. The method of any of Embodiments 28 to 29, further comprising sending (1603) to the target radio access node the indication comprising at least one of that the UE supports a UP integrity protection over the radio access network connected to a fifth generation core, 5GC, and that the UE supports a UP integrity protection mode over the radio access network connected to the EPS.

Embodiment 31. The method of any of Embodiments 28 to 30, wherein the handover request further comprises a UP security activation status.

Embodiment 32. The method of Embodiment 31, wherein the UP security activation status comprises an indication of one of: the UP integrity protection was activated in a source cell; and the UP integrity protection was not activated in the source cell.

Embodiment 33. The method of any of Embodiments 1 to 5, wherein the radio access node is a long term evolution eNode B.

Embodiment 34. A method performed by a target radio access node for interworking handover from a fifth generation system, 5GS, to an evolved packet system, EPS, in a radio access network is provided. The method comprising using (1701) a user plane, UP security activation of a user equipment, UE, from a source cell when a UP security activation status indicates that the UP security activation of the UE from the source cell is supported in the radio access node. The method further comprises activating (1703) UP integrity protection with the UE when the UE supports UP integrity protection over the radio access network connected to the EPS.

Embodiment 35. The method of Embodiment 34, further comprising handling (1705) an error. The error comprises a UP security policy indicating a different UP security activation status. The method further comprises changing (1707) the UP security activation status to UP integrity protection is not activated.

Embodiment 36. The method of any of Embodiments 34 to 35, further comprising rejecting (1709) a handover request received from a mobility management node when the target radio access node omits compliance with the UP security activation status or when the UE omits support for UP integrity protection.

Embodiment 37. The method of any of Embodiments 34 to 36, wherein the target radio access node is a long term evolution eNode B.

Embodiment 38. An access and mobility node (900) for interworking handover from a fifth generation system, 5GS, to an evolved packet system, EPS, in a radio access network is provided. The access and mobility node comprising a processor (910); and a memory (920) coupled to the processor. The memory stores instructions that when executed by the processor causes the processor to perform operations according to any of Embodiments 25 to 27.

Embodiment 39. A computer program product, comprising a non-transitory computer readable storage medium comprising computer readable program code embodied in the medium that when executed by a processor (910) of an access and mobility node (900) causes the processor to perform operations according to any of Embodiments 25 to 27.

Embodiment 40. A mobility management node (1000) for interworking handover from a fifth generation system, 5GS, to an evolved packet system, EPS, in a radio access network is provided. The mobility management node comprising a processor (1010); and a memory (1020) coupled to the processor. The memory stores instructions that when executed by the processor causes the processor to perform operations according to any of Embodiments 28 to 33.

Embodiment 41. A computer program product, comprising a non-transitory computer readable storage medium comprising computer readable program code embodied in the medium that when executed by a processor (1010) of a mobility management node (1000) causes the processor to perform operations according to any of Embodiments 28 to 33.

Embodiment 42. A target radio access node (700) for interworking handover from a fifth generation system, 5GS, to an evolved packet system, EPS, in a radio access network is provided. The radio access node comprising a processor (710); and a memory (720) coupled to the processor. The memory stores instructions that when executed by the processor causes the processor to perform operations according to any of Embodiments 34 to 37.

Embodiment 43. A computer program product, comprising a non-transitory computer readable storage medium comprising computer readable program code embodied in the medium that when executed by a processor (710) of a target radio access node (700) causes the processor to perform operations according to any of Embodiments 34 to 37.

References include TS 33.501 (V 16.3.0) and TS 23.401 (V 16.7.0).

Further definitions and embodiments are discussed below:
In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, microcode, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

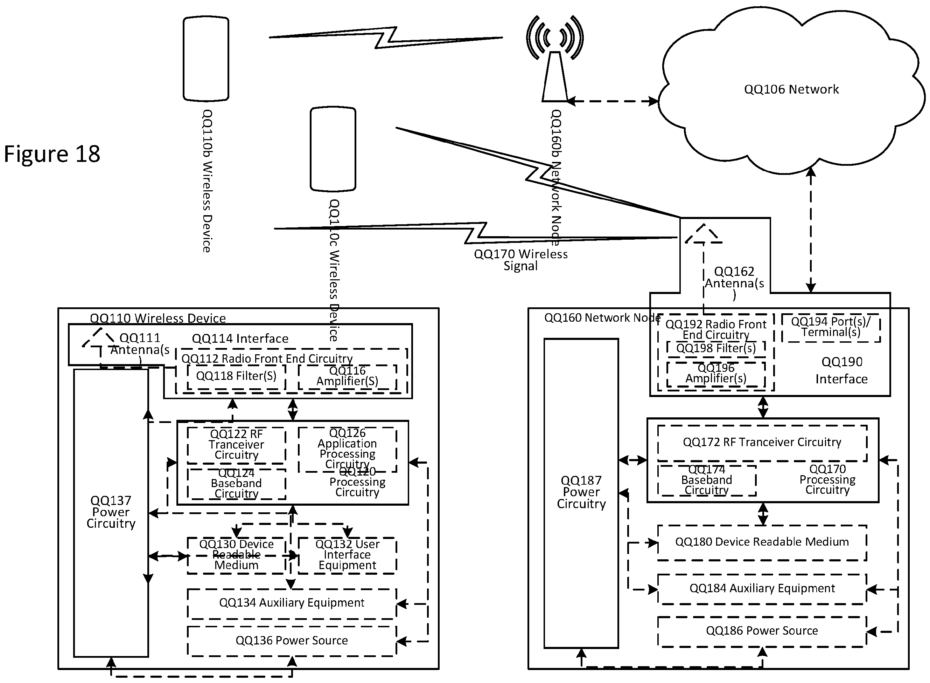

Figure 18: A wireless network in accordance with some embodiments.

Although the subject matter described herein may be implemented in any appropriate type of system using any suitable components, the embodiments disclosed herein are described in relation to a wireless network, such as the example wireless network illustrated in Figure 18. For simplicity, the wireless network of Figure 18 only depicts network QQ106, network nodes QQ160 and QQ160b, and WDs QQ110, QQ110b, and QQ110c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node QQ160 and wireless device (WD) QQ110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network QQ106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node QQ160 and WD QQ110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 18, network node QQ160 includes processing circuitry QQ170, device readable medium QQ180, interface QQ190, auxiliary equipment QQ184, power source QQ186, power circuitry QQ187, and antenna QQ162. Although network node QQ160 illustrated in the example wireless network of Figure 18 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node QQ160 are depicted as single boxes located within a larger box, or nested within multiple boxes, in practice, a network node may comprise multiple different physical components that make up a single illustrated component (e.g., device readable medium QQ180 may comprise multiple separate hard drives as well as multiple RAM modules).

Similarly, network node QQ160 may be composed of multiple physically separate components (e.g., a NodeB component and a RNC component, or a BTS component and a BSC component, etc.), which may each have their own respective components. In certain scenarios in which network node QQ160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node QQ160 may be configured to support multiple radio access technologies (RATs). In such embodiments, some components may be duplicated (e.g., separate device readable medium QQ180 for the different RATs) and some components may be reused (e.g., the same antenna QQ162 may be shared by the RATs). Network node QQ160 may also include multiple sets of the various illustrated components for different wireless technologies integrated into network node QQ160, such as, for example, GSM, WCDMA, LTE, NR, WiFi, or Bluetooth wireless technologies. These wireless technologies may be integrated into the same or different chip or set of chips and other components within network node QQ160.

Processing circuitry QQ170 is configured to perform any determining, calculating, or similar operations (e.g., certain obtaining operations) described herein as being provided by a network node. These operations performed by processing circuitry QQ170 may include processing information obtained by processing circuitry QQ170 by, for example, converting the obtained information into other information, comparing the obtained information or converted information to information stored in the network node, and/or performing one or more operations based on the obtained information or converted information, and as a result of said processing making a determination.

Processing circuitry QQ170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ160 components, such as device readable medium QQ180, network node QQ160 functionality. For example, processing circuitry QQ170 may execute instructions stored in device readable medium QQ180 or in memory within processing circuitry QQ170. Such functionality may include providing any of the various wireless features, functions, or benefits discussed herein. In some embodiments, processing circuitry QQ170 may include a system on a chip (SOC).

In some embodiments, processing circuitry QQ170 may include one or more of radio frequency (RF) transceiver circuitry QQ172 and baseband processing circuitry QQ174. In some embodiments, radio frequency (RF) transceiver circuitry QQ172 and baseband processing circuitry QQ174 may be on separate chips (or sets of chips), boards, or units, such as radio units and digital units. In alternative embodiments, part or all of RF transceiver circuitry QQ172 and baseband processing circuitry QQ174 may be on the same chip or set of chips, boards, or units.

In certain embodiments, some or all of the functionality described herein as being provided by a network node, base station, eNB or other such network device may be performed by processing circuitry QQ170 executing instructions stored on device readable medium QQ180 or memory within processing circuitry QQ170. In alternative embodiments, some or all of the functionality may be provided by processing circuitry QQ170 without executing instructions stored on a separate or discrete device readable medium, such as in a hard-wired manner. In any of those embodiments, whether executing instructions stored on a device readable storage medium or not, processing circuitry QQ170 can be configured to perform the described functionality. The benefits provided by such functionality are not limited to processing circuitry QQ170 alone or to other components of network node QQ160, but are enjoyed by network node QQ160 as a whole, and/or by end users and the wireless network generally.

Device readable medium QQ180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry QQ170. Device readable medium QQ180 may store any suitable instructions, data or information, including a computer program, software, an application including one or more of logic, rules, code, tables, etc. and/or other instructions capable of being executed by processing circuitry QQ170 and, utilized by network node QQ160. Device readable medium QQ180 may be used to store any calculations made by processing circuitry QQ170 and/or any data received via interface QQ190. In some embodiments, processing circuitry QQ170 and device readable medium QQ180 may be considered to be integrated.

Interface QQ190 is used in the wired or wireless communication of signalling and/or data between network node QQ160, network QQ106, and/or WDs QQ110. As illustrated, interface QQ190 comprises port(s)/terminal(s) QQ194 to send and receive data, for example to and from network QQ106 over a wired connection. Interface QQ190 also includes radio front end circuitry QQ192 that may be coupled to, or in certain embodiments a part of, antenna QQ162. Radio front end circuitry QQ192 comprises filters QQ198 and amplifiers QQ196. Radio front end circuitry QQ192 may be connected to antenna QQ162 and processing circuitry QQ170. Radio front end circuitry may be configured to condition signals communicated between antenna QQ162 and processing circuitry QQ170. Radio front end circuitry QQ192 may receive digital data that is to be sent out to other network nodes or WDs via a wireless connection. Radio front end circuitry QQ192 may convert the digital data into a radio signal having the appropriate channel and bandwidth parameters using a combination of filters QQ198 and/or amplifiers QQ196. The radio signal may then be transmitted via antenna QQ162. Similarly, when receiving data, antenna QQ162 may collect radio signals which are then converted into digital data by radio front end circuitry QQ192. The digital data may be passed to processing circuitry QQ170. In other embodiments, the interface may comprise different components and/or different combinations of components.

In certain alternative embodiments, network node QQ160 may not include separate radio front end circuitry QQ192, instead, processing circuitry QQ170 may comprise radio front end circuitry and may be connected to antenna QQ162 without separate radio front end circuitry QQ192. Similarly, in some embodiments, all or some of RF transceiver circuitry QQ172 may be considered a part of interface QQ190. In still other embodiments, interface QQ190 may include one or more ports or terminals QQ194, radio front end circuitry QQ192, and RF transceiver circuitry QQ172, as part of a radio unit (not shown), and interface QQ190 may communicate with baseband processing circuitry QQ174, which is part of a digital unit (not shown).

Antenna QQ162 may include one or more antennas, or antenna arrays, configured to send and/or receive wireless signals. Antenna QQ162 may be coupled to radio front end circuitry QQ190 and may be any type of antenna capable of transmitting and receiving data and/or signals wirelessly. In some embodiments, antenna QQ162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna QQ162 may be separate from network node QQ160 and may be connectable to network node QQ160 through an interface or port.

Antenna QQ162, interface QQ190, and/or processing circuitry QQ170 may be configured to perform any receiving operations and/or certain obtaining operations described herein as being performed by a network node. Any information, data and/or signals may be received from a wireless device, another network node and/or any other network equipment. Similarly, antenna QQ162, interface QQ190, and/or processing circuitry QQ170 may be configured to perform any transmitting operations described herein as being performed by a network node. Any information, data and/or signals may be transmitted to a wireless device, another network node and/or any other network equipment.

Power circuitry QQ187 may comprise, or be coupled to, power management circuitry and is configured to supply the components of network node QQ160 with power for performing the functionality described herein. Power circuitry QQ187 may receive power from power source QQ186. Power source QQ186 and/or power circuitry QQ187 may be configured to provide power to the various components of network node QQ160 in a form suitable for the respective components (e.g., at a voltage and current level needed for each respective component). Power source QQ186 may either be included in, or external to, power circuitry QQ187 and/or network node QQ160. For example, network node QQ160 may be connectable to an external power source (e.g., an electricity outlet) via an input circuitry or interface such as an electrical cable, whereby the external power source supplies power to power circuitry QQ187. As a further example, power source QQ186 may comprise a source of power in the form of a battery or battery pack which is connected to, or integrated in, power circuitry QQ187. The battery may provide backup power should the external power source fail. Other types of power sources, such as photovoltaic devices, may also be used.

Alternative embodiments of network node QQ160 may include additional components beyond those shown in Figure 18 that may be responsible for providing certain aspects of the network node's functionality, including any of the functionality described herein and/or any functionality necessary to support the subject matter described herein. For example, network node QQ160 may include user interface equipment to allow input of information into network node QQ160 and to allow output of information from network node QQ160. This may allow a user to perform diagnostic, maintenance, repair, and other administrative functions for network node QQ160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE or other terminal implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device QQ110 includes antenna QQ111, interface QQ114, processing circuitry QQ120, device readable medium QQ130, user interface equipment QQ132, auxiliary equipment QQ134, power source QQ136 and power circuitry QQ137. WD QQ110 may include multiple sets of one or more of the illustrated components for different wireless technologies supported by WD QQ110, such as, for example, GSM, WCDMA, LTE, NR, WiFi, WiMAX, or Bluetooth wireless technologies, just to mention a few. These wireless technologies may be integrated into the same or different chips or set of chips as other components within WD QQ110.

Antenna QQ111 may include one or more antennas or antenna arrays, configured to send and/or receive wireless signals, and is connected to interface QQ114. In certain alternative embodiments, antenna QQ111 may be separate from WD QQ110 and be connectable to WD QQ110 through an interface or port. Antenna QQ111, interface QQ114, and/or processing circuitry QQ120 may be configured to perform any receiving or transmitting operations described herein as being performed by a WD. Any information, data and/or signals may be received from a network node and/or another WD. In some embodiments, radio front end circuitry and/or antenna QQ111 may be considered an interface.

As illustrated, interface QQ114 comprises radio front end circuitry QQ112 and antenna QQ111. Radio front end circuitry QQ112 comprise one or more filters QQ118 and amplifiers QQ116. Radio front end circuitry QQ114 is connected to antenna QQ111 and processing circuitry QQ120, and is configured to condition signals communicated between antenna QQ111 and processing circuitry QQ120. Radio front end circuitry QQ112 may be coupled to or a part of antenna QQ111. In some embodiments, WD QQ110 may not include separate radio front end circuitry QQ112; rather, processing circuitry QQ120 may comprise radio front end circuitry and may be connected to antenna QQ111. Similarly, in some embodiments, some or all of RF transceiver circuitry QQ122 may be considered a part of interface QQ114. Radio front end circuitry QQ112 may receive digital data that is to be sent out to other network nodes or WDs via a wireless connection. Radio front end circuitry QQ112 may convert the digital data into a radio signal having the appropriate channel and bandwidth parameters using a combination of filters QQ118 and/or amplifiers QQ116. The radio signal may then be transmitted via antenna QQ111. Similarly, when receiving data, antenna QQ111 may collect radio signals which are then converted into digital data by radio front end circuitry QQ112. The digital data may be passed to processing circuitry QQ120. In other embodiments, the interface may comprise different components and/or different combinations of components.

Processing circuitry QQ120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD QQ110 components, such as device readable medium QQ130, WD QQ110 functionality. Such functionality may include providing any of the various wireless features or benefits discussed herein. For example, processing circuitry QQ120 may execute instructions stored in device readable medium QQ130 or in memory within processing circuitry QQ120 to provide the functionality disclosed herein.

As illustrated, processing circuitry QQ120 includes one or more of RF transceiver circuitry QQ122, baseband processing circuitry QQ124, and application processing circuitry QQ126. In other embodiments, the processing circuitry may comprise different components and/or different combinations of components. In certain embodiments processing circuitry QQ120 of WD QQ110 may comprise a SOC. In some embodiments, RF transceiver circuitry QQ122, baseband processing circuitry QQ124, and application processing circuitry QQ126 may be on separate chips or sets of chips. In alternative embodiments, part or all of baseband processing circuitry QQ124 and application processing circuitry QQ126 may be combined into one chip or set of chips, and RF transceiver circuitry QQ122 may be on a separate chip or set of chips. In still alternative embodiments, part or all of RF transceiver circuitry QQ122 and baseband processing circuitry QQ124 may be on the same chip or set of chips, and application processing circuitry QQ126 may be on a separate chip or set of chips. In yet other alternative embodiments, part or all of RF transceiver circuitry QQ122, baseband processing circuitry QQ124, and application processing circuitry QQ126 may be combined in the same chip or set of chips. In some embodiments, RF transceiver circuitry QQ122 may be a part of interface QQ114. RF transceiver circuitry QQ122 may condition RF signals for processing circuitry QQ120.

In certain embodiments, some or all of the functionality described herein as being performed by a WD may be provided by processing circuitry QQ120 executing instructions stored on device readable medium QQ130, which in certain embodiments may be a computer-readable storage medium. In alternative embodiments, some or all of the functionality may be provided by processing circuitry QQ120 without executing instructions stored on a separate or discrete device readable storage medium, such as in a hard-wired manner. In any of those particular embodiments, whether executing instructions stored on a device readable storage medium or not, processing circuitry QQ120 can be configured to perform the described functionality. The benefits provided by such functionality are not limited to processing circuitry QQ120 alone or to other components of WD QQ110, but are enjoyed by WD QQ110 as a whole, and/or by end users and the wireless network generally.

Processing circuitry QQ120 may be configured to perform any determining, calculating, or similar operations (e.g., certain obtaining operations) described herein as being performed by a WD. These operations, as performed by processing circuitry QQ120, may include processing information obtained by processing circuitry QQ120 by, for example, converting the obtained information into other information, comparing the obtained information or converted information to information stored by WD QQ110, and/or performing one or more operations based on the obtained information or converted information, and as a result of said processing making a determination.

Device readable medium QQ130 may be operable to store a computer program, software, an application including one or more of logic, rules, code, tables, etc. and/or other instructions capable of being executed by processing circuitry QQ120. Device readable medium QQ130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry QQ120. In some embodiments, processing circuitry QQ120 and device readable medium QQ130 may be considered to be integrated. User interface equipment QQ132 may provide components that allow for a human user to interact with WD QQ110. Such interaction may be of many forms, such as visual, audial, tactile, etc. User interface equipment QQ132 may be operable to produce output to the user and to allow the user to provide input to WD QQ110. The type of interaction may vary depending on the type of user interface equipment QQ132 installed in WD QQ110. For example, if WD QQ110 is a smart phone, the interaction may be via a touch screen; if WD QQ110 is a smart meter, the interaction may be through a screen that provides usage (e.g., the number of gallons used) or a speaker that provides an audible alert (e.g., if smoke is detected). User interface equipment QQ132 may include input interfaces, devices and circuits, and output interfaces, devices and circuits. User interface equipment QQ132 is configured to allow input of information into WD QQ110, and is connected to processing circuitry QQ120 to allow processing circuitry QQ120 to process the input information. User interface equipment QQ132 may include, for example, a microphone, a proximity or other sensor, keys/buttons, a touch display, one or more cameras, a USB port, or other input circuitry. User interface equipment QQ132 is also configured to allow output of information from WD QQ110, and to allow processing circuitry QQ120 to output information from WD QQ110. User interface equipment QQ132 may include, for example, a speaker, a display, vibrating circuitry, a USB port, a headphone interface, or other output circuitry. Using one or more input and output interfaces, devices, and circuits, of user interface equipment QQ132, WD QQ110 may communicate with end users and/or the wireless network, and allow them to benefit from the functionality described herein.

Auxiliary equipment QQ134 is operable to provide more specific functionality which may not be generally performed by WDs. This may comprise specialized sensors for doing measurements for various purposes, interfaces for additional types of communication such as wired communications etc. The inclusion and type of components of auxiliary equipment QQ134 may vary depending on the embodiment and/or scenario.

Power source QQ136 may, in some embodiments, be in the form of a battery or battery pack. Other types of power sources, such as an external power source (e.g., an electricity outlet), photovoltaic devices or power cells, may also be used. WD QQ110 may further comprise power circuitry QQ137 for delivering power from power source QQ136 to the various parts of WD QQ110 which need power from power source QQ136 to carry out any functionality described or indicated herein. Power circuitry QQ137 may in certain embodiments comprise power management circuitry. Power circuitry QQ137 may additionally or alternatively be operable to receive power from an external power source; in which case WD QQ110 may be connectable to the external power source (such as an electricity outlet) via input circuitry or an interface such as an electrical power cable. Power circuitry QQ137 may also in certain embodiments be operable to deliver power from an external power source to power source QQ136. This may be, for example, for the charging of power source QQ136. Power circuitry QQ137 may perform any formatting, converting, or other modification to the power from power source QQ136 to make the power suitable for the respective components of WD QQ110 to which power is supplied.

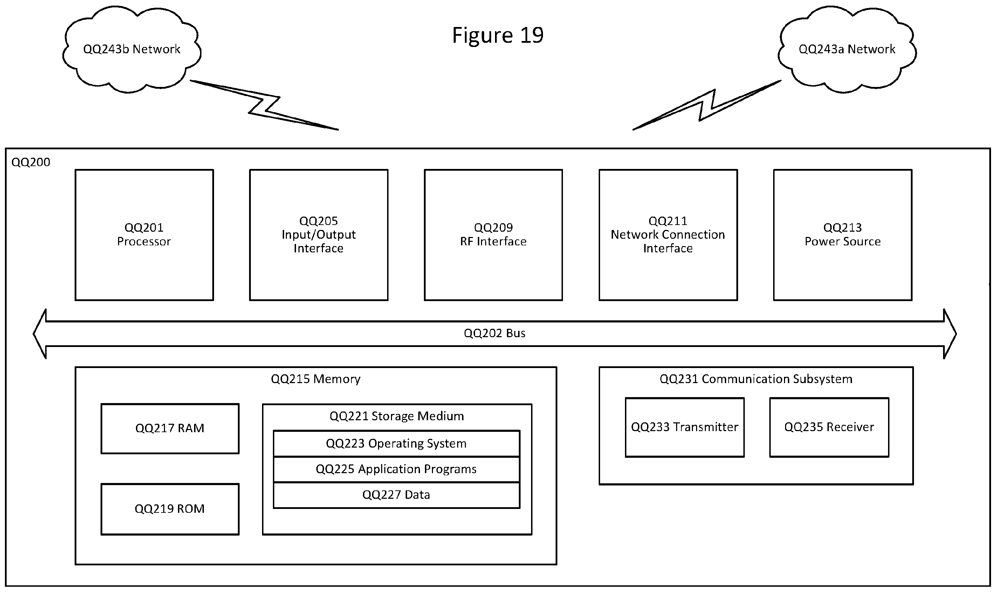

Figure 19: User Equipment in accordance with some embodiments.

Figure 19 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE QQ2200 may be any UE identified by the 3rd Generation Partnership Project (3GPP), including a NB-IoT UE, a machine type communication (MTC) UE, and/or an enhanced MTC (eMTC) UE. UE QQ200, as illustrated in Figure 19, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 19 is a UE, the components discussed herein are equally applicable to a WD, and vice-versa.

In Figure 19, UE QQ200 includes processing circuitry QQ201 that is operatively coupled to input/output interface QQ205, radio frequency (RF) interface QQ209, network connection interface QQ211, memory QQ215 including random access memory (RAM) QQ217, read-only memory (ROM) QQ219, and storage medium QQ221 or the like, communication subsystem QQ231, power source QQ233, and/or any other component, or any combination thereof. Storage medium QQ221 includes operating system QQ223, application program QQ225, and data QQ227. In other embodiments, storage medium QQ221 may include other similar types of information. Certain UEs may utilize all of the components shown in Figure 19, or only a subset of the components. The level of integration between the components may vary from one UE to another UE. Further, certain UEs may contain multiple instances of a component, such as multiple processors, memories, transceivers, transmitters, receivers, etc.

In Figure 19, processing circuitry QQ201 may be configured to process computer instructions and data. Processing circuitry QQ201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry QQ201 may include two central processing units (CPUs). Data may be information in a form suitable for use by a computer.

In the depicted embodiment, input/output interface QQ205 may be configured to provide a communication interface to an input device, output device, or input and output device. UE QQ200 may be configured to use an output device via input/output interface QQ205. An output device may use the same type of interface port as an input device. For example, a USB port may be used to provide input to and output from UE QQ200. The output device may be a speaker, a sound card, a video card, a display, a monitor, a printer, an actuator, an emitter, a smartcard, another output device, or any combination thereof. UE QQ200 may be configured to use an input device via input/output interface QQ205 to allow a user to capture information into UE QQ200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 19, RF interface QQ209 may be configured to provide a communication interface to RF components such as a transmitter, a receiver, and an antenna. Network connection interface QQ211 may be configured to provide a communication interface to network QQ243a. Network QQ243a may encompass wired and/or wireless networks such as a local-area network (LAN), a wide-area network (WAN), a computer network, a wireless network, a telecommunications network, another like network or any combination thereof. For example, network QQ243a may comprise a Wi-Fi network. Network connection interface QQ211 may be configured to include a receiver and a transmitter interface used to communicate with one or more other devices over a communication network according to one or more communication protocols, such as Ethernet, TCP/IP, SONET, ATM, or the like. Network connection interface QQ211 may implement receiver and transmitter functionality appropriate to the communication network links (e.g., optical, electrical, and the like). The transmitter and receiver functions may share circuit components, software or firmware, or alternatively may be implemented separately.

RAM QQ217 may be configured to interface via bus QQ202 to processing circuitry QQ201 to provide storage or caching of data or computer instructions during the execution of software programs such as the operating system, application programs, and device drivers. ROM QQ219 may be configured to provide computer instructions or data to processing circuitry QQ201. For example, ROM QQ219 may be configured to store invariant low-level system code or data for basic system functions such as basic input and output (I/O), startup, or reception of keystrokes from a keyboard that are stored in a non-volatile memory. Storage medium QQ221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium QQ221 may be configured to include operating system QQ223, application program QQ225 such as a web browser application, a widget or gadget engine or another application, and data file QQ227. Storage medium QQ221 may store, for use by UE QQ200, any of a variety of various operating systems or combinations of operating systems.

Storage medium QQ221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium QQ221 may allow UE QQ200 to access computer-executable instructions, application programs or the like, stored on transitory or non-transitory memory media, to off-load data, or to upload data. An article of manufacture, such as one utilizing a communication system may be tangibly embodied in storage medium QQ221, which may comprise a device readable medium.

In Figure 19, processing circuitry QQ201 may be configured to communicate with network QQ243b using communication subsystem QQ231. Network QQ243a and network QQ243b may be the same network or networks or different network or networks. Communication subsystem QQ231 may be configured to include one or more transceivers used to communicate with network QQ243b. For example, communication subsystem QQ231 may be configured to include one or more transceivers used to communicate with one or more remote transceivers of another device capable of wireless communication such as another WD, UE, or base station of a radio access network (RAN) according to one or more communication protocols, such as IEEE 802.QQ2, CDMA, WCDMA, GSM, LTE, UTRAN, WiMax, or the like. Each transceiver may include transmitter QQ233 and/or receiver QQ235 to implement transmitter or receiver functionality, respectively, appropriate to the RAN links (e.g., frequency allocations and the like). Further, transmitter QQ233 and receiver QQ235 of each transceiver may share circuit components, software or firmware, or alternatively may be implemented separately.

In the illustrated embodiment, the communication functions of communication subsystem QQ231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem QQ231 may include cellular communication, Wi-Fi communication, Bluetooth communication, and GPS communication. Network QQ243b may encompass wired and/or wireless networks such as a local-area network (LAN), a wide-area network (WAN), a computer network, a wireless network, a telecommunications network, another like network or any combination thereof. For example, network QQ243b may be a cellular network, a Wi-Fi network, and/or a near-field network. Power source QQ213 may be configured to provide alternating current (AC) or direct current (DC) power to components of UE QQ200.

The features, benefits and/or functions described herein may be implemented in one of the components of UE QQ200 or partitioned across multiple components of UE QQ200. Further, the features, benefits, and/or functions described herein may be implemented in any combination of hardware, software or firmware. In one example, communication subsystem QQ231 may be configured to include any of the components described herein. Further, processing circuitry QQ201 may be configured to communicate with any of such components over bus QQ202. In another example, any of such components may be represented by program instructions stored in memory that when executed by processing circuitry QQ201 perform the corresponding functions described herein. In another example, the functionality of any of such components may be partitioned between processing circuitry QQ201 and communication subsystem QQ231. In another example, the non-computationally intensive functions of any of such components may be implemented in software or firmware and the computationally intensive functions may be implemented in hardware.

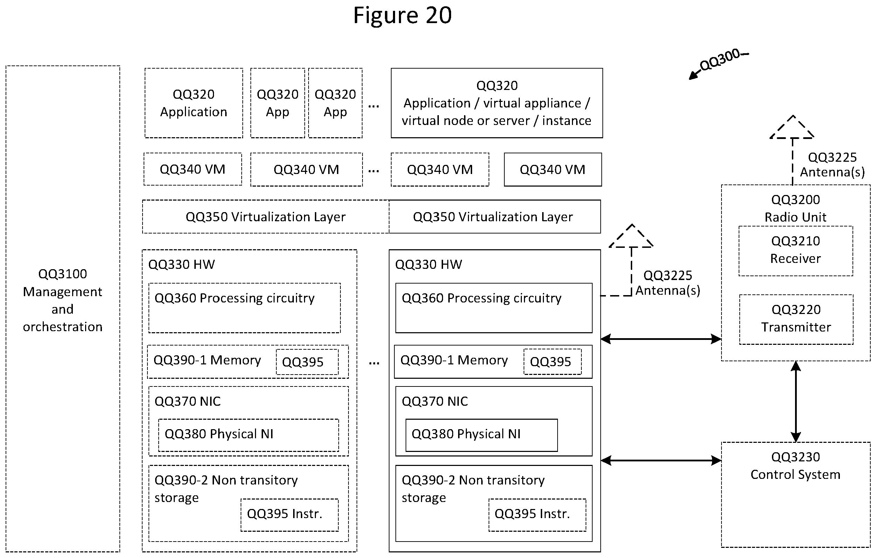

Figure 20: Virtualization environment in accordance with some embodiments

Figure 20 is a schematic block diagram illustrating a virtualization environment QQ300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments QQ300 hosted by one or more of hardware nodes QQ330. Further, in embodiments in which the virtual node is not a radio access node or does not require radio connectivity (e.g., a core network node), then the network node may be entirely virtualized.

The functions may be implemented by one or more applications QQ320 (which may alternatively be called software instances, virtual appliances, network functions, virtual nodes, virtual network functions, etc.) operative to implement some of the features, functions, and/or benefits of some of the embodiments disclosed herein. Applications QQ320 are run in virtualization environment QQ300 which provides hardware QQ330 comprising processing circuitry QQ360 and memory QQ390. Memory QQ390 contains instructions QQ395 executable by processing circuitry QQ360 whereby application QQ320 is operative to provide one or more of the features, benefits, and/or functions disclosed herein.

Virtualization environment QQ300, comprises general-purpose or special-purpose network hardware devices QQ330 comprising a set of one or more processors or processing circuitry QQ360, which may be commercial off-the-shelf (COTS) processors, dedicated Application Specific Integrated Circuits (ASICs), or any other type of processing circuitry including digital or analog hardware components or special purpose processors. Each hardware device may comprise memory QQ390-1 which may be non-persistent memory for temporarily storing instructions QQ395 or software executed by processing circuitry QQ360. Each hardware device may comprise one or more network interface controllers (NICs) QQ370, also known as network interface cards, which include physical network interface QQ380. Each hardware device may also include non-transitory, persistent, machine-readable storage media QQ390-2 having stored therein software QQ395 and/or instructions executable by processing circuitry QQ360. Software QQ395 may include any type of software including software for instantiating one or more virtualization layers QQ350 (also referred to as hypervisors), software to execute virtual machines QQ340 as well as software allowing it to execute functions, features and/or benefits described in relation with some embodiments described herein.

Virtual machines QQ340, comprise virtual processing, virtual memory, virtual networking or interface and virtual storage, and may be run by a corresponding virtualization layer QQ350 or hypervisor. Different embodiments of the instance of virtual appliance QQ320 may be implemented on one or more of virtual machines QQ340, and the implementations may be made in different ways.

During operation, processing circuitry QQ360 executes software QQ395 to instantiate the hypervisor or virtualization layer QQ350, which may sometimes be referred to as a virtual machine monitor (VMM). Virtualization layer QQ350 may present a virtual operating platform that appears like networking hardware to virtual machine QQ340.

As shown in Figure 20, hardware QQ330 may be a standalone network node with generic or specific components. Hardware QQ330 may comprise antenna QQ3225 and may implement some functions via virtualization. Alternatively, hardware QQ330 may be part of a larger cluster of hardware (e.g. such as in a data center or customer premise equipment (CPE)) where many hardware nodes work together and are managed via management and orchestration (MANO) QQ3100, which, among others, oversees lifecycle management of applications QQ320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine QQ340 may be a software implementation of a physical machine that runs programs as if they were executing on a physical, non-virtualized machine. Each of virtual machines QQ340, and that part of hardware QQ330 that executes that virtual machine, be it hardware dedicated to that virtual machine and/or hardware shared by that virtual machine with others of the virtual machines QQ340, forms a separate virtual network elements (VNE).

Still in the context of NFV, Virtual Network Function (VNF) is responsible for handling specific network functions that run in one or more virtual machines QQ340 on top of hardware networking infrastructure QQ330 and corresponds to application QQ320 in Figure 20.

In some embodiments, one or more radio units QQ3200 that each include one or more transmitters QQ3220 and one or more receivers QQ3210 may be coupled to one or more antennas QQ3225. Radio units QQ3200 may communicate directly with hardware nodes QQ330 via one or more appropriate network interfaces and may be used in combination with the virtual components to provide a virtual node with radio capabilities, such as a radio access node or a base station.

In some embodiments, some signalling can be effected with the use of control system QQ3230 which may alternatively be used for communication between the hardware nodes QQ330 and radio units QQ3200.

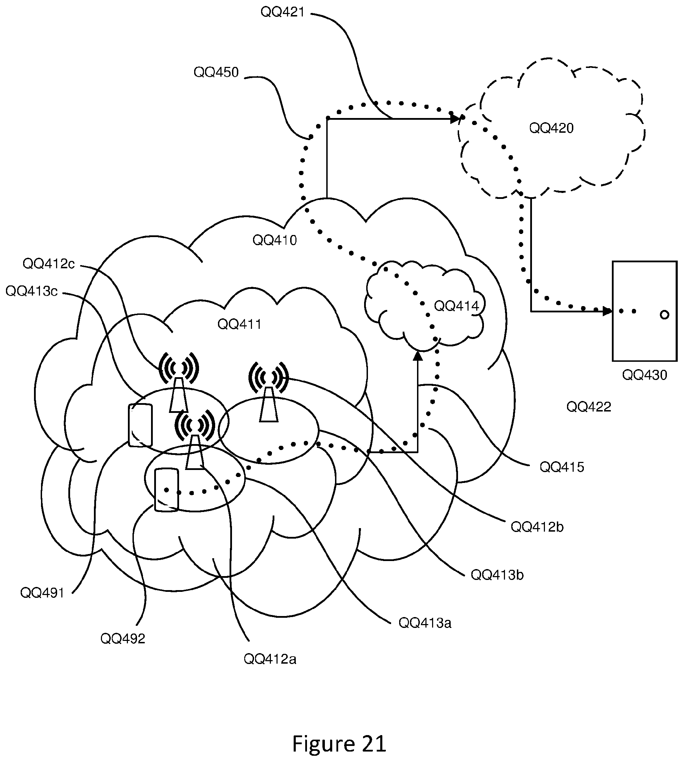

Figure 21: Telecommunication network connected via an intermediate network to a host computer in accordance with some embodiments.

With reference to FIGURE 21, in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloud-implemented server, a distributed server or as processing resources in a server farm. Host computer QQ430 may be under the ownership or control of a service provider, or may be operated by the service provider or on behalf of the service provider. Connections QQ421 and QQ422 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of Figure 21 as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signaling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

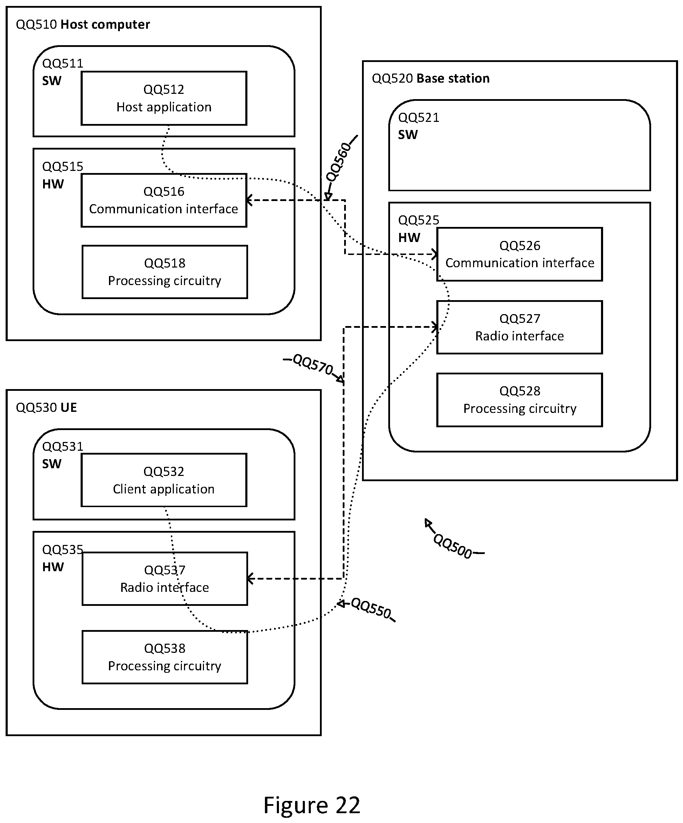

Figure 22: Host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 22. In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in Figure 22) served by base station QQ520. Communication interface QQ526 may be configured to facilitate connection QQ560 to host computer QQ510. Connection QQ560 may be direct or it may pass through a core network (not shown in Figure 22) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to. Its hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in Figure 22 may be similar or identical to host computer QQ430, one of base stations QQ412a, QQ412b, QQ412c and one of UEs QQ491, QQ492 of Figure 21, respectively. This is to say, the inner workings of these entities may be as shown in Figure 22 and independently, the surrounding network topology may be that of Figure 21.

In Figure 22, OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments may improve the performance of OTT services provided to UE QQ530 using OTT connection QQ550, in which wireless connection QQ570 forms the last segment. More precisely, the teachings of these embodiments may improve the deblock filtering for video processing and thereby provide benefits such as improved video encoding and/or decoding.

A measurement procedure may be provided for the purpose of monitoring data rate, latency and other factors on which the one or more embodiments improve. There may further be an optional network functionality for reconfiguring OTT connection QQ550 between host computer QQ510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signaling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc.

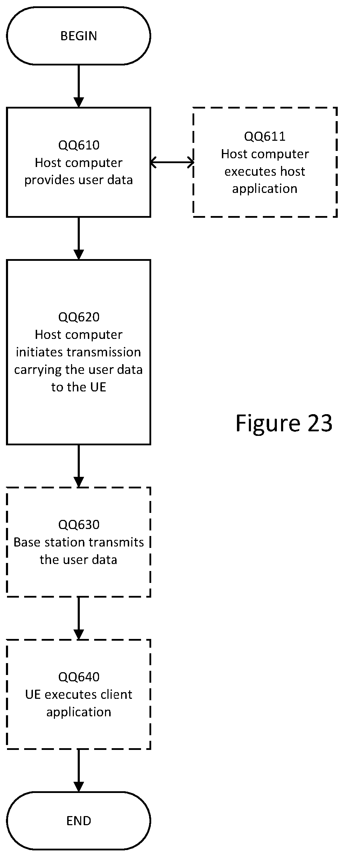

Figure 23: Methods implemented in a communication system including a host computer, a base station and a user equipment in accordance with some embodiments.

Figure 23 is a flowchart illustrating a method implemented in a communication system, in accordance with one embodiment. The communication system includes a host computer, a base station and a UE which may be those described with reference to Figures 21 and 22. For simplicity of the present disclosure, only drawing references to Figure 23 will be included in this section. In step QQ610, the host computer provides user data. In substep QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer.

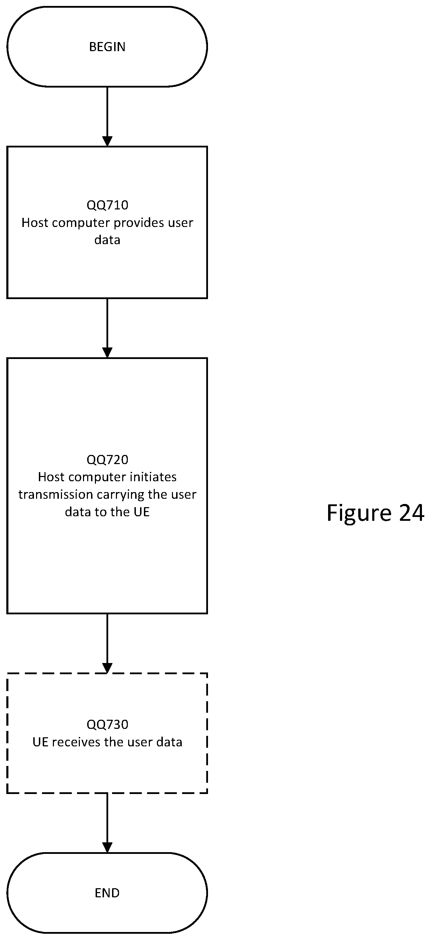

Figure 24: Methods implemented in a communication system including a host computer, a base station and a user equipment in accordance with some embodiments.

Figure 24 is a flowchart illustrating a method implemented in a communication system, in accordance with one embodiment. The communication system includes a host computer, a base station and a UE which may be those described with reference to Figures 21 and 22. For simplicity of the present disclosure, only drawing references to Figure 24 will be included in this section. In step QQ710 of the method, the host computer provides user data. In an optional substep (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

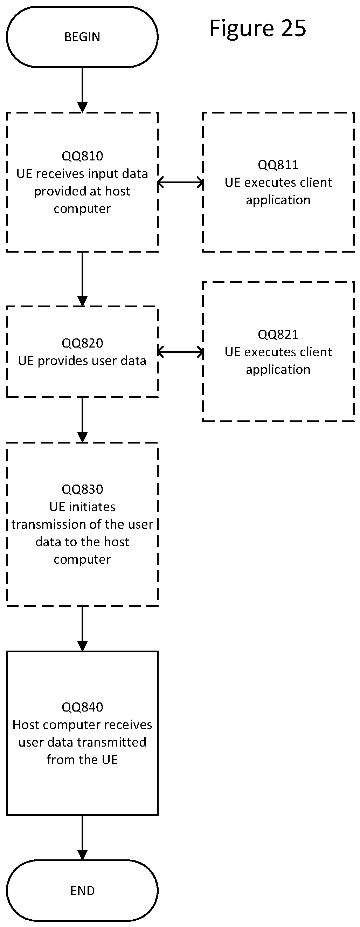

Figure 25: Methods implemented in a communication system including a host computer, a base station and a user equipment in accordance with some embodiments.

Figure 25 is a flowchart illustrating a method implemented in a communication system, in accordance with one embodiment. The communication system includes a host computer, a base station and a UE which may be those described with reference to Figures 21 and 22. For simplicity of the present disclosure, only drawing references to Figure 25 will be included in this section. In step QQ810 (which may be optional), the UE receives input data provided by the host computer. Additionally or alternatively, in step QQ820, the UE provides user data. In substep QQ821 (which may be optional) of step QQ820, the UE provides the user data by executing a client application. In substep QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in substep QQ830 (which may be optional), transmission of the user data to the host computer. In step QQ840 of the method, the host computer receives the user data transmitted from the UE, in accordance with the teachings of the embodiments described throughout this disclosure.

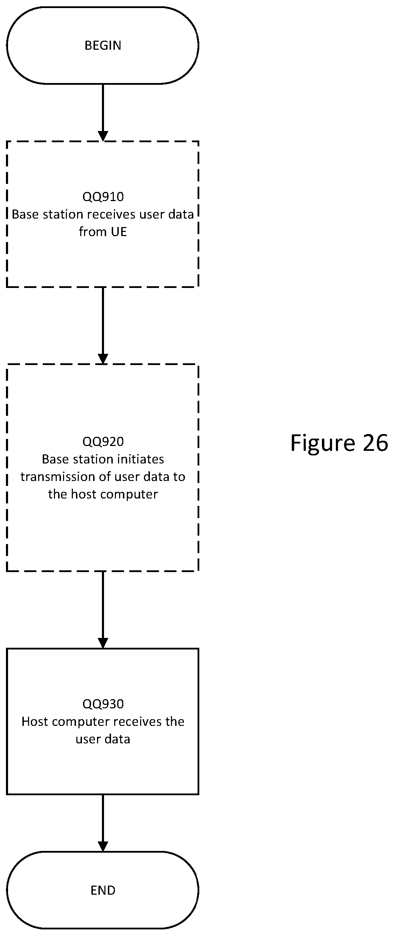

Figure 26: Methods implemented in a communication system including a host computer, a base station and a user equipment in accordance with some embodiments.

Figure 26 is a flowchart illustrating a method implemented in a communication system, in accordance with one embodiment. The communication system includes a host computer, a base station and a UE which may be those described with reference to Figures 21 and 22. For simplicity of the present disclosure, only drawing references to Figure 26 will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method performed by an access and mobility node for interworking handover from a fifth generation system, 5GS, to an evolved packet system, EPS, the method comprising:
forwarding (1501) a relocation request for a user equipment, UE, to a mobility management node, the relocation request comprising a user plane, UP, security policy and a UP security activation status for a packet data unit, PDU, session established between a source node and the UE, the PDU session being mapped to a packet data network, PDN, connection in the EPS for the UE being handed over to the mobility management node.

2. The method of Claim 1, wherein the UP security activation status comprises an indication comprising at least one of that the UE supports a UP integrity protection mode over a radio access network connected to a fifth generation core, 5GC, and that the UE supports a UP integrity protection mode over a radio access network connected to the EPS.

3. A method performed by a mobility management node for interworking handover from a fifth generation system, 5GS, to an evolved packet system, EPS, the method comprising:
receiving (1601) a relocation request from an access and mobility node, wherein the relocation request comprises user plane, UP, security policy and a UP security activation status for a packet data unit, PDU, session established between a source node and the UE, the PDU session being mapped to a packet data network, PDN, connection in the EPS for the UE being handed over to the mobility management node; and
sending (1605) a handover request to a target radio access node, wherein the handover request comprises the UP security policy and the UP security activation status for the PDU session mapped to the PDN connection in the EPS.

4. The method of Claim 3, wherein the relocation request further comprises information comprising a user plane, UP, security policy for an EPS packet data network, PDN, connection mapped from a packet data unit, PDU, session that a source radio access node or a source core node established with the user equipment, UE.

5. The method of any of Claims 3 or 4, further comprising:
sending (1603) to the target radio access node the UP security policy and the UP security activation status for the PDU session mapped to PDN connection in the EPS.

6. The method of any of Claims 3-5, wherein the UP security activation status comprises an indication of one of:
the UP integrity protection was activated in a source cell; and
the UP integrity protection was not activated in the source cell.

7. The method of any of Claims 3-6, wherein the radio access node is a long term evolution eNodeB, eNB, or a Next Generation Evolved Node-B, ng-eNB.

8. An access and mobility node (900) for interworking handover in a radio access network from a fifth generation system, 5GS, to an evolved packet system, EPS, the access and mobility node comprising:
a processor (910); and
a memory (920) coupled to the processor, wherein the memory stores instructions that when executed by the processor causes the processor to perform operations comprising forward a relocation request for a user equipment, UE, to a mobility management node, the relocation request comprising a user plane, UP, security policy and a UP security activation status for a packet data unit, PDU, session established between a source node and the UE, the PDU session being mapped to a packet data network, PDN, connection in the EPS for the UE being handed over to the mobility management node.

9. The access and mobility node of Claim 8 adapted to perform operations according to Claim 2.

10. A computer program product, comprising:
a non-transitory computer readable storage medium comprising computer readable program code embodied in the medium that when executed by a processor (910) of an access and mobility node (900) causes the processor to perform operations comprising:
forward a relocation request for a user equipment, UE, to a mobility management node, the relocation request comprising a user plane, UP, security policy and a UP security activation status per a packet data unit, PDU, session established between a source node and the UE, the PDU session being mapped to a packet data network, PDN, connection in the EPS for the UE being handed over to the mobility management node.

11. The computer program product of Claim 10 whereby execution of the program code causes the access and mobility node to perform operations according to Claim 30.

12. A mobility management node (1000) for interworking handover in a radio access network from a fifth generation system, 5GS, to an evolved packet system, EPS, the mobility management node comprising:
a processor (1010); and
a memory (1020) coupled to the processor, wherein the memory stores instructions that when executed by the processor causes the processor to perform operations comprising receive a relocation request from an access and mobility node, wherein the relocation request comprises user plane, UP, security policy and a UP security activation status per a packet data unit, PDU, session established between a source node and the UE, the PDU session being mapped to a packet data network, PDN, PDN, connection in the EPS for the UE being handed over to the mobility management node; and
send a handover request to a target radio access node, wherein the handover request comprises the UP security policy and the UP security activation status per the PDU session mapped to the PDN connection in the EPS.

13. The mobility management node of Claim 12 adapted to perform operations according to any of Claims 4-7.

14. A computer program product, comprising:
a non-transitory computer readable storage medium comprising computer readable program code embodied in the medium that when executed by a processor (1010) of a mobility management node (1000) causes the processor to perform operations comprising:
receive a relocation request from an access and mobility node, wherein the relocation request comprises user plane, UP, security policy and a UP security activation status per a packet data unit, PDU, session established between a source node and the UE, the PDU session being mapped to a packet data network, PDN, connection in the EPS for the UE being handed over to the mobility management node; and
send a handover request to a target radio access node, wherein the handover request comprises the UP security policy and the UP security activation status for the PDU session mapped to the PDN connection in the EPS.

15. The computer program product of Claim 14 whereby execution of the program code causes the mobility management node to perform operations according to any of Claims 4-7.
